# EUROPEAN PATENT SPECIFICATION

(11) **EP 4 600 099 B1**
(45) Date of publication and mention of the grant of the patent: **18.11.2026**
(21) Application number: 24156062.2
(22) Date of filing: 06.02.2024
(51) Int. Cl.: B60W 10/02, B60W 10/06, B60W 10/10, B60W 30/14, B60W 30/18, B60W 50/00, B60W 50/08

(54) **SYSTEM AND METHOD FOR CONTROLLING A POWERTRAIN SYSTEM OF A VEHICLE**
SYSTEM UND VERFAHREN ZUR STEUERUNG EINES ANTRIEBSSTRANGSYSTEMS EINES FAHRZEUGS
SYSTÈME ET PROCÉDÉ DE COMMANDE D'UN SYSTÈME DE TRANSMISSION D'UN VÉHICULE

(43) Date of publication of application: 13.08.2025
(73) Proprietor: VOLVO TRUCK CORPORATION, 405 08 Göteborg (SE)
(72) Inventor: HUSBERG, Tobias, 442 93 KAREBY (SE); RYBERG, Henrik, 417 19 GÖTEBORG (SE); JOHANNESSON, Wilhelm, 417 12 GÖTEBORG (SE)
(74) Representative: Kransell & Wennborg KB

(56) References cited:
- EP-B1- 2 915 713
- US-A1- 2005 014 605
- US-A1- 2015 191 168

## Description

### TECHNICAL FIELD

The invention relates generally to the field of controlling a powertrain system of a vehicle, while the vehicle is moving, and, more specifically, to an automatically controlled powertrain system for vehicles. In particular aspects, the invention relates to a computer system, powertrain system, vehicle and methods for controlling an engine of a vehicle, while the vehicle is moving. The invention can be applied to any type of vehicle, including heavy-duty vehicles, such as trucks, buses, and construction equipment, among other vehicle types. Although the invention may be described with respect to a particular vehicle, the invention is not restricted to any particular vehicle.

### BACKGROUND

Conventional internal combustion engine vehicles operate continuously when the engine is running, even when idling at traffic lights, stuck in traffic, or during extended periods of inactivity. This constant engine operation results in unnecessary fuel consumption and increased emissions, contributing to environmental pollution and increased fuel costs for vehicle owners. To address these issues, various stop and start technologies have been developed, such as engine idle stop-start systems, which shut off the engine when the vehicle is stationary and automatically restart it when the driver releases the brake or engages the accelerator.

In recent years, there has been a growing demand for more sophisticated and intelligent engine stop-and-start systems for heavy-duty vehicles that can adapt to a wider range of driving conditions. The development of automatic and predictive engine stop-and-start systems addresses these challenges by incorporating predictive algorithms, real-time data sources, and advanced control strategies. Automatic and predictive engine stop-and-start systems aim to provide smoother, more efficient, and less intrusive engine stop-and-start experiences for drivers while increasing fuel savings and emissions reduction. According to its Abstract, US 2005/014605 A1 discloses a method for controlling the drive unit of a vehicle in which an extended overrun mode having reduced fuel consumption and reduced pollutant emission is possible.

However, in connection with the use of such systems in a vehicle, such as a heavy-duty vehicle, there is still a need for further improving the operations of the powertrain system, while the vehicle is moving.

### SUMMARY

According to a first aspect of the invention, there is provided a computer system for controlling a powertrain system of a vehicle. The powertrain system comprises an internal combustion engine connectable to one or more drive wheels. The computer system comprises processing circuitry configured to selectively operate the powertrain system in a first freewheeling mode, in which an output shaft of the internal combustion engine is rotating, the internal combustion engine is disconnected from the one or more drive wheels, and fuel is being supplied to the internal combustion engine; a second freewheeling mode, in which the output shaft of the internal combustion engine is non-rotating, and the internal combustion engine is disconnected from the one or more drive wheels; a coasting mode, in which the output shaft of the internal combustion engine is rotating, the internal combustion engine is connected to the one or more drive wheels, and fuel supply to the internal combustion engine is interrupted; and an engine braking mode, in which the output shaft of the internal combustion engine is rotating, the internal combustion engine being connected to the one or more drive wheels, and the internal combustion engine further being operated so as to generate a braking effect. Moreover, the processing circuitry is configured to: determine a vehicle target speed; determine that a freewheeling mode condition is fulfilled based on any one of topography data and vehicle data; determine that the powertrain system is operating in either the first freewheeling mode or the second freewheeling mode; if the powertrain system is operating in the first freewheeling mode and an acceleration level fulfills an acceleration level condition, control the powertrain system from the first freewheeling mode to the coasting mode, allowing the vehicle to accelerate until reaching the vehicle target speed; and if the powertrain system is operating in the second freewheeling mode, further determine to maintain the second freewheeling mode, allowing the vehicle to accelerate until reaching the vehicle target speed or until a braking condition is fulfilled.

The first aspect of the invention may seek to enhance the fuel efficiency and the operational effectiveness of a vehicle across varying driving conditions, while enabling the vehicle to quickly reach the target speed, particularly during downhill segments. More specifically, the invention aims at improving the control over driveline engagement in vehicles during the transition from a freewheeling mode to a driveline engagement mode, such as coasting and/or engine braking, by considering different powertrain system operational modes, depending on whether the internal combustion engine is in a shutdown state or an operating state. Such freewheeling mode comprises at least an operational mode, in which the engine is disconnected from the drive wheels and also turned off (i.e. engine shutdown, in which the engine output shaft is in a non-rotating state), while the vehicle is moving. The invention is at least partly based on the insight that heavy-duty vehicles, such as trucks and buses, often operate under a wide range of load conditions and topographies, which can influence the fuel consumption and the wear on the powertrain system. Traditional powertrain systems might not distinguish between different freewheeling modes based on the state of the engine, which could lead to less efficient energy use and impact the momentum of the vehicle and fuel efficiency.

A technical benefit may include maintaining enhanced fuel consumption and reduced emissions by operating the powertrain system in one of the available freewheeling modes, while further prolonging the operation of the powertrain system in the second freewheeling mode, particularly during downhill segments, thus enabling a quicker acceleration of the vehicle until the target speed is reached. In addition, by employing the second freewheeling mode, wherein the engine is turned off (engine output shaft is non-rotating), the exhaust aftertreatment system of the vehicle is spared from being exposed to cold exhaust gases that would ordinarily be emitted during coasting with the driveline engaged and air circulating through the engine. Consequently, an additional technical enhancement may involve facilitating the maintenance of the operational temperature within the exhaust aftertreatment system.

Operating the powertrain system in the first freewheeling mode may be advantageous in operating situations where battery recharging may be needed. The first freewheeling mode allows the engine to run, thereby actively charging the battery, as e.g. opposed to the second freewheeling mode. In the latter, the engine is inactive (non-operating) and therefore unable to charge the battery, presenting a risk of inadequate battery power to restart the engine using the starter motor. Additionally, the first freewheeling mode may be beneficial in situations where the operating temperature of the engine exceeds normal thresholds, necessitating the activation of the engine cooling system for active thermal management.

Operating the powertrain system in the second freewheeling mode contributes to even better fuel consumption and reduced emissions. Additionally, the second freewheeling mode allows for quicker attainment of the target speed, as compared to other operational modes, such as the coasting mode, wherein the engine remains connected to the driving wheels. The second freewheeling mode thus facilitates more efficient acceleration and speed management, particularly in situations such as downhill driving. As such, prolonging the operation of the powertrain system in the second freewheeling mode enables the maintenance of a higher average speed.

Optionally, in some examples, including in at least one preferred example, the processing circuitry may be configured to, upon the vehicle reaching the vehicle target speed in the second freewheeling mode, directly switch from the second freewheeling mode to the engine braking mode, thereby by-passing the coasting mode. A technical benefit may include providing a more prolonged utilization of the second freewheeling mode. As such, it becomes possible to extend the time the vehicle can freewheel with the engine shutdown, effectively reducing the duration spent below the cruise speed. Moreover, by delaying the restart of the engine for braking until it is necessary, the vehicle can maintain closer to its target speed for a longer period, enhancing overall fuel efficiency and reducing the need for fuel-powered acceleration to return to the target speed (i.e. the cruise speed). By bypassing the coasting mode, the system may avoid unnecessary deceleration of the vehicle, leading to faster attainment of the target speed, as set e.g. by the cruise control system, especially in situations involving downhill gradients.

Optionally, in some examples, including in at least one preferred example, the processing circuitry may be configured to, upon a fulfillment of the braking condition in the second freewheeling mode, directly switch from the second freewheeling mode to the engine braking mode, thereby by-passing the coasting mode. A technical benefit may include providing a more prolonged utilization of the second freewheeling mode. As such, it becomes possible to extend the time the vehicle can freewheel with the engine shutdown, effectively reducing the duration spent below the cruise speed. Moreover, by delaying the restart of the engine for braking until it is necessary, the vehicle can maintain closer to its target speed for a longer period, enhancing overall fuel efficiency and reducing the need for fuel-powered acceleration to return to the target speed (i.e. the cruise speed). By bypassing the coasting mode, the system may avoid unnecessary deceleration of the vehicle, leading to faster attainment of the target speed, as set e.g. by the cruise control system, especially in situations involving downhill gradients. When a braking condition is met, the engagement of engine braking allows for timely deceleration without the intermediate step of coasting, where the engine might idle without contributing to propulsion or braking.

Optionally, in some examples, including in at least one preferred example, the vehicle target speed may be controlled by a predictive cruise control system. Incorporating a predictive cruise control system for speed management may further contribute to the overall efficiency, safety, and comfort of the driving experience. By way of example, the vehicle target speed is the cruise control system set speed. The vehicle target speed is determined based on topography data and vehicle data. The cruise control system set speed can be adjusted by a user of the vehicle, such as the driver of the vehicle, and/or automatically by the computer system.

Optionally, in some examples, including in at least one preferred example, the processing circuitry may be configured to determine fulfillment of the braking condition by predicting a maximum vehicle speed for the engine braking mode, and determine that the braking condition is fulfilled if the predicted maximum vehicle speed exceeds the vehicle target speed.

More specifically, the braking condition may be fulfilled if the predicted maximum vehicle speed (for the engine braking mode) exceeds the vehicle target speed during the second freewheeling mode. In this context, vehicle target speed typically refers to the allowable vehicle speed.

Optionally, in some examples, including in at least one preferred example, the maximum vehicle speed for the engine braking mode may be predicted from topography data and vehicle data.

Optionally, in some examples, including in at least one preferred example, the predicted maximum vehicle speed for the engine braking mode may be predicted from topography data and vehicle data including gradient of the slope, length of the slope, and mass of the vehicle.

Optionally, in some examples, including in at least one preferred example, predicting a maximum vehicle speed for the engine braking mode may comprise determining available engine braking power for the engine braking mode and required engine braking power for the engine braking mode, and wherein the braking condition is fulfilled if the required engine braking power exceeds the available engine braking power. A technical benefit may include providing enhanced downhill control through prediction of necessary engine braking power and available braking power, ensuring safety and reducing dependence on mechanical brakes.

Optionally, in some examples, including in at least one preferred example, the processing circuitry may be configured to determine fulfillment of the braking condition by comparing available engine braking power with required engine braking power, and wherein the braking condition is fulfilled if the required engine braking power exceeds the available engine braking power. A technical benefit may include providing a precise determination of the braking condition through prediction of necessary engine braking power and available braking power, ensuring safety and reducing dependence on mechanical brakes.

The required engine braking power may be indicative of an engine braking power required for maintaining the vehicle at the vehicle target speed during a downhill road segment.

The required engine braking power may be predicted based on topography data and vehicle data. A technical benefit may include providing improved downhill control by tailoring engine braking to specific road conditions and vehicle load, ensuring effective speed management and safety.

The available engine braking power may be predicted based on determining which gear is to be used during the engine braking mode. A technical benefit may include providing a more precise control of deceleration by matching engine braking power with the optimal gear selection, ensuring smooth and effective speed reduction.

The processing circuitry may be configured to predict a required engine braking power to maintain the vehicle at the vehicle target speed during a downhill road segment. A technical benefit may include providing enhanced downhill control through prediction of necessary engine braking power, ensuring safety and reducing dependence on mechanical brakes.

Optionally, in some examples, including in at least one preferred example, the processing circuitry may be configured to determine to maintain the second freewheeling mode based on a predicted available engine braking power. A technical benefit may include providing an even more precise determination of the duration of the second freewheeling mode (with the engine shutdown) in view of the available engine braking power.

Optionally, in some examples, including in at least one preferred example, if the powertrain system is operating in the second freewheeling mode, the processing circuitry may be configured to determine a starting time for a needed engine braking operation. A technical benefit may include providing a timely engagement of engine braking, ensuring the vehicle transitions smoothly from the second freewheeling mode to controlled deceleration at a more precise moment required for maintaining target speed and safety.

Optionally, in some examples, including in at least one preferred example, the processing circuitry may be configured to determine that a freewheeling mode condition is fulfilled based on vehicle data indicative of one or more inhibitors to set the internal combustion engine in a state in which the output shaft of the internal combustion engine is non-rotating. A technical benefit may include providing an effective management of the freewheeling mode(s) by utilizing vehicle data to discern conditions that prevent engine disengagement, ensuring optimal timing for fuel savings and reduced wear.

Optionally, in some examples, including in at least one preferred example, the processing circuitry may be configured to generate the braking effect in the engine braking mode by actively controlling the engine to increase the internal resistance within the engine. A technical benefit may include providing an effective braking power without additional mechanical stress.

Optionally, in some examples, including in at least one preferred example, the processing circuitry may be configured to generate the braking effect in the engine braking mode by controlling the internal combustion engine to release compressed air in one or more cylinders.

Another type of engine braking to generate a braking effect is to restrict the exhaust flow out of the engine. For example, it may be possible to control a valve in the exhaust system to close, partially or fully, thus creating back pressure in the exhaust manifold and cylinders. The generated back pressure opposes the piston's movement on the exhaust stroke, slowing down the engine and, consequently, the vehicle.

Optionally, in some examples, including in at least one preferred example, the powertrain system may include a powertrain shaft arrangement being mechanically connected to one or more wheels. The powertrain shaft arrangement may comprise any one of an internal shaft of the transmission, an output shaft of the transmission, and a driven axle of the wheel. The powertrain system can be provided in several different configurations depending on type of transmission and number of rotational shafts.

According to a second aspect of the invention, there is provided a powertrain system comprising the computer system according to the first aspect, an internal combustion engine, a controllable clutch, a transmission arranged to be coupled to the internal combustion engine by means of the controllable clutch, and wherein the transmission further comprises an output shaft configured to be coupled to a driven axle of a set of wheels.

The invention according to the second aspect may seek to enhance the fuel efficiency and the operational effectiveness of a vehicle across varying driving conditions, while enabling the vehicle to quickly reach the target speed, particularly during downhill segments. More specifically, the invention aims at improving the control over driveline engagement in vehicles during the transition from a freewheeling mode to a driveline engagement mode, such as coasting, by considering different powertrain system operational modes, depending on whether the internal combustion engine is in a shutdown state or an operating state. The invention is at least partly based on the insight that heavy-duty vehicles, such as trucks and buses, often operate under a wide range of load conditions and topographies, which can influence the fuel consumption and the wear on the powertrain system. Traditional powertrain systems might not distinguish between different freewheeling modes based on the state of the engine, which could lead to less efficient energy use and impact the momentum of the vehicle and fuel efficiency. A technical benefit may include maintaining enhanced fuel consumption and reduced emissions by operating the powertrain system in one of the available freewheeling modes, while further prolonging the operation of the powertrain system in the second freewheeling mode, particularly during downhill segments, thus enabling a quicker acceleration of the vehicle until the target speed is reached. In addition, by employing the second freewheeling mode, wherein the engine is turned off (engine output shaft is non-rotating), the exhaust aftertreatment system of the vehicle is spared from being exposed to cold exhaust gases that would ordinarily be emitted during coasting with the driveline engaged and air circulating through the engine. Consequently, an additional technical enhancement may involve facilitating the maintenance of the operational temperature within the exhaust aftertreatment system.

According to a third aspect of the invention, there is provided a vehicle comprising the computer system of the first aspect and/or a powertrain system according to the second aspect. By way of example, the vehicle is a heavy-duty vehicle.

Optionally in some examples, including in at least one preferred example, the vehicle is an internal combustion engine vehicle (ICEV). An ICEV is a vehicle that relies solely on an internal combustion engine for propulsion, without the assistance of electric motors or fuel cells that are characteristic of hybrid or fully electric vehicles. Optionally in some examples, including in at least one preferred example, the vehicle is a non-electric vehicle. In this context, the term non-electric vehicle refers to a vehicle avoid of any electric storage and power system configured to provide traction power to the vehicle. Such electric storage system may be battery system in combination with an electric machine and/or fuel cell system in combination with an electric machine. In other words, a non-electric vehicle is a vehicle comprising the internal combustion engine as the primary, or the only, power source for the powertrain system. The use of the computer system for controlling a non-electric vehicle, while the vehicle is moving, may be particularly useful where the internal combustion engine is the only available power source for the vehicle.

According to a fourth aspect of the invention, there is provided a computer-implemented method for controlling a powertrain system of a vehicle, the powertrain system comprising an internal combustion engine connectable to one or more drive wheels, the powertrain system being selectively operable in: a first freewheeling mode, in which an output shaft of the internal combustion engine is rotating, the internal combustion engine is disconnected from the one or more drive wheels, and fuel is being supplied to the internal combustion engine; a second freewheeling mode, in which the output shaft of the internal combustion engine is non-rotating, and the internal combustion engine is disconnected from the one or more drive wheels; a coasting mode, in which the output shaft of the internal combustion engine is rotating, the internal combustion engine is connected to the one or more drive wheels, and fuel supply to the internal combustion engine is interrupted; and an engine braking mode, in which the output shaft of the internal combustion engine is rotating, the internal combustion engine being connected to the one or more drive wheels, and the internal combustion engine further being operated so as to generate a braking effect; wherein the method comprises: determining, by a processing circuitry of a computer system, a vehicle target speed; determining, by the processing circuitry of the computer system, that a freewheeling mode condition is fulfilled based on any one of topography data and vehicle data; determining, by the processing circuitry of the computer system, that the powertrain system is operating in either the first freewheeling mode or the second freewheeling mode; if the powertrain system is operating in the first freewheeling mode and an acceleration level fulfills an acceleration level condition, controlling, by the processing circuitry of the computer system, the powertrain system from the first freewheeling mode to the coasting mode, allowing the vehicle to accelerate until reaching the vehicle target speed; and if the powertrain system is operating in the second freewheeling mode, further determining, by the processing circuitry of the computer system, to maintain the second freewheeling mode, allowing the vehicle to accelerate until reaching the vehicle target speed or until a braking condition is fulfilled.

The invention according to the fourth aspect may seek to enhance the fuel efficiency and the operational effectiveness of a vehicle across varying driving conditions, while enabling the vehicle to quickly reach the target speed, particularly during downhill segments. More specifically, the invention aims at improving the control over driveline engagement in vehicles during the transition from a freewheeling mode to a driveline engagement mode, such as coasting, by considering different powertrain system operational modes, depending on whether the internal combustion engine is in a shutdown state or an operating state. The invention is at least partly based on the insight that heavy-duty vehicles, such as trucks and buses, often operate under a wide range of load conditions and topographies, which can influence the fuel consumption and the wear on the powertrain system. Traditional powertrain systems might not distinguish between different freewheeling modes based on the state of the engine, which could lead to less efficient energy use and impact the momentum of the vehicle and fuel efficiency.

A technical benefit may include maintaining enhanced fuel consumption and reduced emissions by operating the powertrain system in one of the available freewheeling modes, while further prolonging the operation of the powertrain system in the second freewheeling mode, particularly during downhill segments, thus enabling a quicker acceleration of the vehicle until the target speed is reached. In addition, by employing the second freewheeling mode, wherein the engine is turned off (engine output shaft is non-rotating), the exhaust aftertreatment system of the vehicle is spared from being exposed to cold exhaust gases that would ordinarily be emitted during coasting with the driveline engaged and air circulating through the engine. Consequently, an additional technical enhancement may involve facilitating the maintenance of the operational temperature within the exhaust aftertreatment system.

According to a fifth aspect of the invention, there is provided a computer program product comprising program code for performing, when executed by the processing circuitry of the first aspect, the method of the fourth aspect.

According to a sixth aspect of the invention, there is provided a non-transitory computer-readable storage medium comprising instructions, which when executed by the processing circuitry of the first aspect, cause the processing circuitry to perform the method of fourth aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the invention as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
FIG. 1 illustrates an exemplary view of a vehicle comprising a powertrain system and a computer system having a processing circuitry configured to control the powertrain system according to an example.
FIG. 2 illustrates an example of controlling a powertrain system of a vehicle according to an example.
FIG. 3 is a flow chart of an exemplary method for controlling a powertrain system of a vehicle according to an example.
FIG. 4 is a flow chart of an exemplary method for controlling a powertrain system of a vehicle according to an example.
FIG. 5 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the invention.

In the field of vehicles, there is an increasing demand for improving the fuel efficiency and reduce emissions of the internal combustion engine (ICE). One operation for enhancing fuel efficiency and lowering emissions in a powertrain system is referred to as freewheeling. Freewheeling is commonly applied in heavy-duty vehicles. The purpose of freewheeling in heavy-duty vehicles is to save fuel and reduce engine load under certain driving conditions. It is commonly used when the vehicle is descending downhill or traveling on a slope. According to one type of freewheeling mode, the engine is disengaged from the driving wheel(s), allowing the vehicle to coast freely (in contrast to a conventional coasting mode). Hereby, the heavy-duty vehicle can take advantage of gravitational forces to maintain or increase speed while consuming minimal fuel. This type of freewheeling mode can be particularly useful for improving fuel efficiency and reducing wear and tear on the braking system during downhill descents. Freewheeling can be engaged manually by the driver or automatically by the vehicle's control system, e.g. as a part of the automatic and predictive engine stop-and-start system. When the driver and/or an automatic vehicle control system initiates freewheeling, the transmission is typically shifted to a neutral or coasting position, decoupling the engine from the drivetrain. In some cases, the engine may idle at a minimal RPM to maintain essential functions like power steering and braking.

Freewheeling may also include a specific mode of operation where the engine is typically shutdown (in addition to being disengaged from the driving wheels). This mode of operation may be denoted as a freewheeling mode with the engine shutdown.

The transitions between the various operational modes of the powertrain system can be performed in an automatic manner by a computer system, including e.g. an automatically controlled engine start system. The automatically controlled engine start system is typically an integral part of a so-called automatic and predictive engine stop-and-start system for vehicles. Automatic and predictive engine stop-and-start systems are configured to automatically control one or more vehicle operations, such as shutting-down and restarting the engine, using predictive data and real-time information.

While the use of the automatic and predictive engine stop-and-start systems in heavy-duty vehicles provides a positive impact on the operation of the vehicle, there is still a challenge to determine a suitable transition between the available operational modes of the powertrain system including a first freewheeling mode, a second freewheeling mode, a coasting mode, and an engine braking mode.

In the context of the present invention, the "first freewheeling mode" (FM1) refers to an operational mode in which an output shaft of the engine is rotating, the engine is disconnected from the one or more drive wheels, and fuel is being supplied to the engine. An operational mode where the output shaft of the engine is rotating indicates that the engine is in an active state, such as in an operating mode, engine-on mode, power generation mode, or idling mode. In the first freewheeling mode, the engine is active and running, but not engaged with the drivetrain for propulsion.

Besides that the first freewheeling mode has a positive impact on fuel consumption, operating the powertrain system in the first freewheeling mode may be advantageous in operating situations where battery recharging may be needed. The first freewheeling mode allows the engine to run, thereby actively charging the battery, as e.g. opposed to the second freewheeling mode. In the latter, the engine is inactive (non-operating) and therefore unable to charge the battery, presenting a risk of inadequate battery power to restart the engine using the starter motor. Additionally, the first freewheeling mode may be beneficial in situations where the operating temperature of the engine exceeds normal thresholds, necessitating the activation of the engine cooling system for active thermal management.

In the context of the present invention, the "second freewheeling mode" (FM2) refers to an operational mode in which the output shaft of the engine is non-rotating, and the engine is disconnected from the one or more drive wheels. An operational mode where the output shaft of the engine is non-rotating typically signifies that the engine is in a non-active state, such as in a shutdown state, engine off state, standby mode. By way of example, in the second freewheeling mode, the engine is thus shutdown, and not engaged with the drivetrain for propulsion. In addition, no fuel is supplied to the engine.

Operating the powertrain system in the second freewheeling mode contributes to even better fuel consumption and reduced emissions. Additionally, the second freewheeling mode allows for quicker attainment of the target speed, as compared to other operational modes, such as the coasting mode, wherein the engine remains connected to the driving wheels. The second freewheeling mode thus facilitates more efficient acceleration and speed management, particularly in situations such as downhill driving. As such, prolonging the operation of the powertrain system in the second freewheeling mode enables the maintenance of a higher average speed.

Moreover, in the context of the present invention, the "coasting mode" (CM) refers to an operational mode in which the output shaft of the engine is rotating, the engine is connected to the one or more drive wheels, and fuel supply to the engine being interrupted. In coasting mode, the vehicle moves by its own momentum with minimal engine resistance. Operating a vehicle in the coasting mode may also contribute to lowering the fuel consumption in comparison to a conventional propulsion mode, as fuel supply is interrupted in the coating mode.

Further, in the context of the present invention, the "engine braking mode" (EBM) refers to an operational mode in which the output shaft of the engine is rotating, the engine is connected to the one or more drive wheels, and the engine is further operated so as to generate a braking effect. Operating the engine so as to generate a braking effect means that the engine is actively controlled to increase the internal resistance within the engine, thereby slowing down the vehicle. Engine braking increases engine load to create braking force, for example, by releasing compressed air from the cylinders just before the compression stroke completes (compression release) or creating back pressure in the exhaust system (exhaust brake) to slow down the vehicle. Engine braking may be particularly useful in heavy-duty vehicles for maintaining control and reducing speed on long downhill gradients without overheating the service brakes.

The invention may seek to enhance the fuel efficiency and the operational effectiveness of a vehicle across varying driving conditions, while enabling the vehicle to quickly reach the target speed, particularly during downhill segments. More specifically, the invention aims at improving the control over driveline engagement in vehicles during the transition from a freewheeling mode to a driveline engagement mode, such as coasting, by considering different powertrain system operational modes, depending on whether the internal combustion engine is in a shutdown state or an operating state. The invention is at least partly based on the insight that heavy-duty vehicles, such as trucks and buses, often operate under a wide range of load conditions and topographies, which can influence the fuel consumption and the wear on the powertrain system. Traditional powertrain systems might not distinguish between different freewheeling modes based on the state of the engine, which could lead to less efficient energy use and impact the momentum of the vehicle and fuel efficiency.

A technical benefit technical benefit may include maintaining enhanced fuel consumption and reduced emissions by operating the powertrain system in one of the available freewheeling modes, while further prolonging the operation of the powertrain system in the second freewheeling mode, particularly during downhill segments, thus enabling a quicker acceleration of the vehicle until the target speed is reached. In addition, by employing the second freewheeling mode, wherein the engine is turned off (engine output shaft is non-rotating), the exhaust aftertreatment system of the vehicle is spared from being exposed to cold exhaust gases that would ordinarily be emitted during coasting with the driveline engaged and air circulating through the engine. Consequently, an additional technical enhancement may involve facilitating the maintenance of the operational temperature within the exhaust aftertreatment system.

One example of a vehicle comprising a powertrains system and a computer system will now be described in relation to a vehicle in the form of a heavy-duty vehicle, such as a truck.

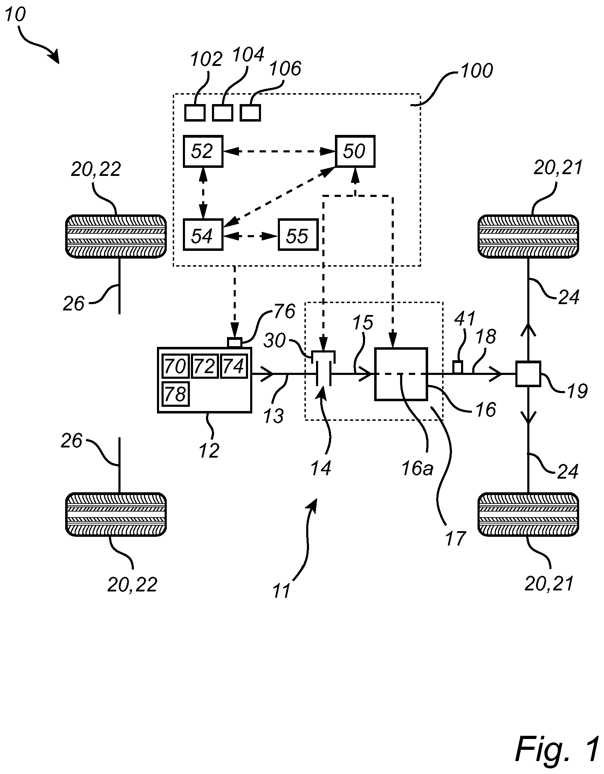

FIG. 1 schematically illustrates an exemplary vehicle 10. The vehicle 10 in FIG. 1 comprises a powertrain system 11. The powertrain system 11 is adapted to power the vehicle 10.

In addition, as depicted in FIG. 1, the vehicle 10 comprises a computer system 100. In this example, the powertrain system 11 comprises the computer system 100. In other examples, the computer system 100 is a separate part of the vehicle, which is configured to be in communication with the powertrain system 11. The computer system 100 may also be a remote server configured to be in communication with the powertrain system 11.

The computer system 100 is configured to control the powertrain system 11. The computer system 100 is configured to selectively operate the powertrain system in the first freewheeling mode FM1, in which an output shaft of the engine is rotating, the engine is disconnected from the one or more drive wheels, and fuel is being supplied to the engine; in the second freewheeling mode FM2, in which the output shaft of the engine is non-rotating, and the engine is disconnected from the one or more drive wheels; in the coasting mode CM, in which the output shaft of the engine is rotating, the engine is connected to the one or more drive wheels, and fuel supply to the engine is interrupted; and in the engine braking mode EBM, in which the output shaft of the engine is rotating, the engine is connected to the one or more drive wheels, and the engine is operated so as to generate a braking effect.

In addition, the computer system 100 is typically intended to control an engine restart attempt of the vehicle 10, while the vehicle 10 is moving. The computer system 100 is thus configured to restart the engine 12 of the vehicle 10, while the vehicle 10 is moving.

The computer system 100 here comprises a processing circuitry 102. The operations of the processing circuitry 102 will be further described herein.

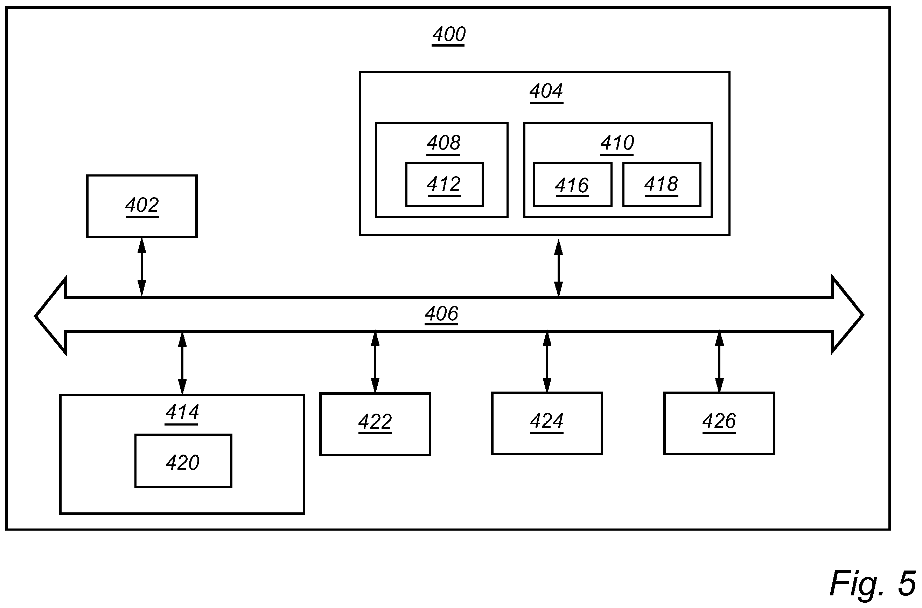

In FIG. 1, the computer system 100 also comprises a memory 104 and a system bus 106. These components and further optional technical details of the computer system 100 are described in relation to FIG. 5.

Turning again to FIG. 1, the powertrain system 11 comprises an internal combustion engine 12. For ease of reference, the internal combustion engine is herein typically denoted as the engine, or sometimes as the ICE. The engine 12 comprises at least one cylinder 74 having a combustion chamber 70 and a reciprocating piston 72. More specifically, the engine 12 comprises a plurality of cylinders 74, each one having a corresponding combustion chamber 70 and a corresponding piston 72 arranged therein.

The powertrain system 11 also comprises a fuel injector 78, as illustrated in FIG. 1. The fuel injector 78 is here an integral part of the engine 12. The fuel injector 78 is configured to inject fuel into the engine 12. The fuel injector 78 may be any suitable type of injector capable of injecting fuel such as a diesel fuel, a gaseous fuel and the like. Typically, the fuel injector 78 is arranged in the cylinder 74, and axially above the piston 72. Each one of the cylinders 74 of the engine 12 comprises a corresponding fuel injector 78. The fuel injector 78 is controllable by the computer system 100. By way of example, the fuel injector 78 is controllable by the processing circuitry 102 of the computer system 100.

The fuel injector 78 is controllable by the processing circuitry 102 of the computer system 100 in order to allow the computer system 100 to switch between the various modes of the powertrain system 11, such as the FM1, FM2, CM and EBM, as described herein.

The engine 12 is configured to output a rotational speed via an engine output shaft 13, also referred to as the output shaft of the engine 12, as illustrated in e.g. FIG. 1. Hence, the powertrain system 11 comprises the engine output shaft 13. The engine output shaft 13 can either be in a rotating state or in a non-rotating state. When the engine output shaft 13 rotates, the engine 12 is typically turned on, while when engine output shaft 13 is non-rotating, the engine 12 is typically shutdown.

The engine 12 is configured to selectively operate in the FM1, FM2, CM and EBM, as described herein.

The engine 12 is typically also configured to operate in a conventional four stroke fashion, i.e. operated by an intake stroke, a compression stroke, a combustion stroke, and an exhaust stroke. In this example, the engine is an internal diesel combustion engine, i.e. an engine designed to work according to the diesel process. By way of example, the engine 12 is a compression ignition internal combustion engine. The engine 12 may also be provided in other types of configurations or be operated by other types of fuels. The components of an engine are well-known, and thus not further described herein.

The powertrain system 11 here also comprises a starter motor 76. The starter motor is here an integral part of the engine 12. Alternatively, the starter motor 76 is operatively connected to the engine 11 to allow the starter motor 76 to crank the engine 12, as is commonly known in the art. As such, the starter motor 76 is configured to crank the engine 12. Engine cranking is performed by controlling the starter motor 76 to engage a flywheel so as to initiate combustion.

Moreover, the powertrain system 11 comprises a transmission arrangement 17. The transmission arrangement 17 comprises a gearbox 16 and a controllable clutch 14.

The gearbox 16 has a number of gear stages to obtain a set of gears. Each one of the gears has a corresponding gear ratio. The transmission arrangement 17 may sometimes be denoted simply as the transmission.

The transmission arrangement 17 is operatively connected to the engine 12 via a transmission input shaft 15. Therefore, the transmission arrangement 17 comprises the transmission input shaft 15. The transmission input shaft 15 rotates with a certain rotational speed while the vehicle 10 is moving. Hence, the transmission input shaft 15 has a corresponding rotational speed. The transmission input shaft 15 is one example of a powertrain shaft. The transmission arrangement 17 also has a transmission output shaft 18 for providing a rotational speed to one or more drive wheels 20 of the vehicle 10, as schematically illustrated in FIG. 1. Briefly stated, the engine output shaft 13 transmits rotational speed from the engine 12 to the transmission arrangement 17 which further transmits the motion via the transmission output shaft 18 to the drive wheels 20, which in FIG. 1 is a pair of rear wheels 21.

The transmission output shaft 18 rotates with a certain rotational speed while the vehicle is moving. Hence, the transmission output shaft 18 has a corresponding rotational speed. The transmission output shaft 18 is another example of a powertrain shaft.

As illustrated in FIG. 1, the vehicle 10 here comprises a pair of front wheels 22 and the pair of rear wheel 21. Moreover, the rear wheels 21 are here driven wheels, while the front wheels 22 are non-driven wheels. The driven wheels 21 are operatively connected to corresponding rotational driven axles 24. The non-driven wheels 22 are operatively connected to corresponding rotational non-driven axles 26. Typically, the vehicle 10 comprises one or more driven wheels and one or more non-driven wheels. The driven wheels 21 are driven by the powertrain system 11.

As such, the pair of front wheels 22 are here operatively connected to the respective non-driven axles 26. In a similar vein, the pair of rear wheels 21 are here operatively connected to the respective driven axles 24.

The transmission arrangement 17 is one of a semi-automatic transmission arrangement and an automatic transmission arrangement. Automatic transmission arrangements are common in heavy-duty vehicles to control engagement and disengagement of e.g. an automated disk-clutch between the engine and the transmission arrangement. An automatic transmission arrangement is typically made up of the input shaft 15, the intermediate shaft 16a, which has at least one gearwheel in engagement with a gearwheel on the input shaft 15, and an internal main shaft (not shown) with gearwheels which engage with gearwheels on the intermediate shaft 16a. The internal main shaft is also connected to the transmission output shaft 18 coupled to the driving wheels 21 via, for example, the drive shaft(s) 24.

The drive shaft 24 rotates with a certain rotational speed while the vehicle 10 is moving. Hence, the drive shaft 24 has a corresponding rotational speed. The drive shaft 24 is another example of a powertrain shaft.

In one example, when the transmission arrangement 17 comprises the intermediate shaft 16a arranged in the transmission arrangement 17, the transmission intermediate shaft 16a rotates with a certain rotational speed while the vehicle is moving. Hence, the transmission intermediate shaft 16a has a corresponding rotational speed. The transmission intermediate shaft 16a is another example of a powertrain shaft.

The transmission arrangement 17 is in this example an automated manual transmission (AMT), configured to transmit torque to the drive wheels 21. Typically, the transmission arrangement 17 is configured to transmit torque to the drive wheels 21 via the transmission output shaft 18 via one or more driven wheel shafts 24 or the like. In other words, the vehicle 10 is typically provided with an engine 12 operatively connected to the transmission arrangement 17, such as an automated manual transmission (AMT), for transmitting torque to the vehicle driven wheels 21.

As mentioned above, and as also illustrated in FIG. 1, the powertrain system 11 also comprises the clutch 14. The clutch 14 is here a controllable clutch. The controllable clutch 14 is e.g. controllable by the processing circuitry 102 of the computer system 100. Hence, the term controllable clutch refers to a clutch that is configured to be controllable by a processing circuitry, such as the processing circuity 102. For ease of reference, the controllable clutch may simply be referred to as the clutch 14. The clutch 14 can be arranged in several manners in the powertrain system 11. In FIG. 1, the controllable clutch 14 is arranged in-between the engine 12 and the transmission arrangement 17. The controllable clutch 14 is configured to operatively connect the transmission arrangement 17 with the engine 12. In particular, the controllable clutch 14 is configured to operatively connect the engine output shaft 13 of the engine 12 to the transmission input shaft 15 of the transmission arrangement 17. As such, the engine output shaft 13 of the engine 12 can be operatively connected to the transmission input shaft 15 of the transmission arrangement 17 via the controllable clutch 14 when a gear is engaged. As is commonly known in the art, the transmission arrangement 17 and the clutch 14 are hereby operable to select a gear ratio between the engine 12 and a pair of the driven wheels 21. While FIG. 1 schematically illustrates an example where the transmission arrangement 17 includes the controllable clutch 14, the controllable clutch 14 can also be a stand-alone device of the powertrain system 11.

The controllable clutch 14 is a mechanical component configured to transfers power from the engine 12 into the transmission arrangement 17. Moreover, the controllable clutch 14 is configured to disconnect the engine 12 from the gearbox 16 and the rest of the transmission arrangement 17, when required. The controllable clutch 14 is here configured for transmitting the rotational torque from the engine 12 to the driven wheels 21. By way of example, the controllable clutch 14 is one of a single clutch unit, a dual-clutch unit, or any other type of multi-clutch unit.

The controllable clutch 14 is controlled by the computer system 100. In particular, the controllable clutch 14 is controlled by the processing circuitry 102 of the computer system 100. By way of example, the controllable clutch 14 is controlled by the processing circuitry 102 of the computer system 100 via a clutch actuator 30, as illustrated in FIG. 1.

The controllable clutch 14 allows the computer system 100 to engage or disengage the engine's power from the wheels 20. The controllable clutch 14 is thus configured to engage the engine 12 to the gearbox 16 as well as to disengage the engine 12 from the gearbox 16. The controllable clutch 14 can also be used to allow smooth standing starts through clutch control, which partially engages allowing the clutch to slip. In this example, the controllable clutch 14 is also controlled to restart the engine 12 while the vehicle 10 is moving. As such, the controllable clutch 14 is used for restarting the engine 12.

By means of the clutch 14, the engine 12 can be connected to the one or more drive wheels, such as the wheels 21. Also, by means of the clutch 14, the engine 12 can be disconnected from the one or more drive wheels, such as the wheels 21. The engine 12 may also be disconnected from the one or more drive wheels by setting the transmission to neutral, meaning that no gear is engaged.

Optionally, the vehicle 10 also includes a differential function 19 arranged in-between the pair of driven wheels 21 and the transmission arrangement 17. The differential function 19 mechanically (operatively) connects the output shaft 18 of the transmission arrangement 17 with the driven axles 24. By means of the differential function 19, the engine 12 can be connected to the one or more drive wheels, such as the wheels 21. The differential function 19 is a well-known standard component and thus not further described herein.

The vehicle 10 may optionally include a service brake unit (not shown). The service brake unit may be a wet brake type or a dry brake type. The service brake unit is typically configured for performing a brake function. As an example, the service brake unit is a wheel brake. In addition, a service brake unit may be provided for each wheel.

Turning again to the transmission arrangement 17. The transmission arrangement 17 may be configured to be controlled by the driver and/or automatically via an electronic control unit (ECU). One example of an ECU is a transmission control unit. In FIG. 1, the powertrain system 11 comprises the transmission control unit (TCU) 50. The transmission control unit may also be denoted as a transmission electronic control unit (TECU). By way of example, the TCU 50 is an integral part of the computer system 100. The TCU 50 is configured to control the transmission arrangement 17. Hence, the TCU 50 is configured to control the controllable clutch 14 and the gearbox 16.

The computer system 100 may also comprise an automatically controlled engine start system 54. The automatically controlled engine start system 54 is configured to automatically control the operation of shutting down the engine 12 and restarting the engine 12 while the vehicle 10 is moving. The automatically controlled engine start system 54 is here an integral part of an automatic and predictive engine stop-and-start system. Such system is configured to predict suitable situations where the engine can be shutdown and restarted, while the vehicle 10 is moving, and also configured to control the shutdown and restart of the engine 12, while the vehicle 10 is moving. The automatically controlled engine start system 54 may include a predictive cruise control system, or at least be configured to communicate with a predictive cruise control system of the vehicle 10. Hence, the computer system 100 may also comprise a predictive cruise control system. The predictive cruise control system is here an automatic predictive cruise control system 55, as illustrated in Fig. 1. A predictive automatic cruise control system is for example configured to control a speed of the vehicle based on a vehicle target speed in automatic manner. The automatic predictive cruise control system 55 is also configured to control the speed of the vehicle in an automatic manner. Thus, the predictive automatic cruise control system 55 is configured to control the vehicle according to a vehicle target speed in an automatic manner. The computers system 100 here comprises the automatic predictive cruise control system 55.

The predictive cruise control system 55 is configured to control the powertrain system 11 based on predicted changes in relation to the route ahead of the vehicle 10. A predictive cruise control system 55 may generally be configured to control the vehicle 10 based on topography and route data. The predictive cruise control system 55 may comprise, or communicate with, any one of a radar or lidar sensors used to detect vehicles and obstacles ahead, camera system to provide visual data about the road and traffic conditions, and GPS (Global Positioning System) to determine the vehicle position. The predictive cruise control system may further be configured to provide, or acquire, information about the road ahead, including changes in terrain, curves, and upcoming traffic conditions, speed and distance settings, brake control data, throttle control to maintain desired speed or accelerate, etc.

The predictive cruise control system 55 typically incorporates the basic functionalities of an automatic cruise control but adds predictive elements. For example, the predictive cruise control system 55 uses GPS and digital maps to anticipate road conditions ahead, such as curves, hills, and changes in the speed limit. Hereby, the predictive cruise control system 55 is configured to adjust the vehicle's speed proactively by considering the upcoming road conditions.

The engine 12 can be started by the starter motor 76. In other examples, the processing circuitry 102 is configured to perform the restart engine by the starter motor 76. By way of example, the processing circuitry 102 is configured to control the starter motor 76 to engage the flywheel of the powertrain system 11 so as to initiate combustion, as is commonly referred to as an engine cranking operation.

The engine 12 can also be started by controlling the controllable clutch 14 to a torque transfer position. In the torque transfer position, the controllable clutch 14 is set in a state in which torque is transferable between the engine 12 and the wheels 20, more specifically the driven wheels 21 (here also corresponding to the rear wheels). By controlling the controllable clutch 14 to the torque transfer position, the controllable clutch 14 is allowed to change a torque transfer between the engine 12 and the wheels 21. In this manner, the computer system 100 is configured to initiate the engine restart attempt. The controllable clutch 14 can be controlled in several different manners. By way of example, the controllable clutch 14 is controlled to gradually change the torque transfer between the engine 12 and the wheels 21. Alternatively, or in addition, the controllable clutch 14 can be controlled to change the torque transfer between the engine 12 and the wheels 21 in step-wise manner. Hence, the clutch 14 can either be set in a partly engaged state or in a fully engaged state start the engine.

As depicted in FIG. 1, the TCU 50 is also configured to be in communication with the automatically controlled engine start system 54. As such, the TCU 50 can control the controllable clutch 14 in response to data from the automatically controlled engine start system 54. In addition, the TCU 50 is here configured to be in communication with an electronic brake system (EBS) 52. The processing circuitry 102 can either be an integral part of the TCU, or a separate part configured to be in communication with the TCU 50.

In other examples, the TCU 50 comprises the automatically controlled engine start system 54. In addition, or alternatively, the TCU 50 comprises the predictive cruise control system 55.

The TCU 50 is here also configured to be in communication with an electronic control unit of the engine 12. Such electronic control unit may be denoted as an engine electronic control unit (EECU) or an engine management system (EMS). Both the TCU 50 and the EECU (and/or EMS) are typically integral parts of the computer system 100.

In the following, an exemplary set of operations for controlling the powertrain system 11 of the heavy-duty vehicle 10 will be further described. The powertrains system 11 is controlled by the computer system 100. The computer system 100 is intended to control the powertrain system 11 of the vehicle 10, while the vehicle 10 is moving, i.e. in a non-stationary state. Accordingly, the computer system 100 is configured to control the engine of the vehicle 10, while the vehicle 10 is moving.

The following operations may generally be performed by the processing circuitry 102 of the computer system 100 so as to control the powertrain system 11, while the vehicle 10 is moving.

The processing circuitry 102 configured to selectively operate the powertrain system 11 in the first freewheeling mode FM1, in which the output shaft 13 of the internal combustion engine 12 is rotating, the internal combustion engine 12 is disconnected from the one or more drive wheels 21, and fuel is being supplied to the internal combustion engine 12; the second freewheeling mode FM2, in which the output shaft 13 of the internal combustion engine 12 is non-rotating, and the internal combustion engine 12 is disconnected from the one or more drive wheels 21; the coasting mode CM, in which the output shaft 13 of the internal combustion engine 12 is rotating, the internal combustion engine 12 is connected to the one or more drive wheels 21, and fuel supply to the internal combustion engine 12 is interrupted; and the engine braking mode EBM, in which the output shaft 13 of the internal combustion engine 12 is rotating, the internal combustion engine 13 is connected to the one or more drive wheels 21, and the internal combustion engine is operated so as to generate a braking effect.

In the above modes, the fuel is supplied to the engine 12 by the fuel injector 78, as described herein. The control of fuel to the engine 12 is also controlled by controlling the fuel injector 12, as described herein.

The processing circuitry 102 is configured control the powertrain system 11 and the vehicle 10 from topography data by analyzing and extracting relevant information about the route, including distance, elevation changes, road conditions, and other factors that can affect the vehicle's performance and fuel consumption. The processing circuitry 102 is configured to obtain topography data from various sources, such as digital maps, GPS data, or geographic information system (GIS) databases. These sources may generally include relevant information about the road network, including roads, highways, elevation data, and potential destinations. In one example, the topography data is received by the processing circuitry 102 from a route planner system in the vehicle. The topography data may likewise be acquired by a so-called look ahead device, which is typically an integral part of an ordinary cruise control system. The look ahead device may in addition, or alternatively, be an integral part of the computer system 100.

The automatically controlled engine start system 54 is typically configured to automatically control the engine 12 of the powertrain system 11 of vehicle 10, such as the above modes, including shutdown of the engine and engine restarts while the vehicle 10 is moving along the route.

The automatically controlled engine start system 54 is configured to control the powertrain system 11 from vehicle data that can be gathered from various vehicle sensors, from a navigation system of the vehicle 10, from data received from one or more control units of the vehicle 10, and/or from various technologies and systems for tracking and monitoring the vehicle 10. Thus, the processing circuitry 102 is configured to receive data and store data in the memory 104 of the computer system 100.

Initially, the processing circuitry 102 is configured to determine that a freewheeling mode condition is fulfilled based on any one of topography data and vehicle data.

The processing circuitry 102 is also configured to determine that the powertrain system 11 is operating in either the first freewheeling mode FM1 or the second freewheeling mode FM2.

In addition, the processing circuitry 102 is configured to determine a vehicle target speed. By way of example, the vehicle target speed corresponds to the cruise set speed, i.e. the speed set by the predictive cruise control system 55. Setting the vehicle target speed by a predictive cruise control system belongs to common general knowledge, and is thus not further described herein.

Moreover, the processing circuitry 102 is configured to control the powertrain system 11 in different ways depending on the current operational mode and certain conditions.

For example, ff the powertrain system 11 is operating in the first freewheeling mode FM1 and an acceleration level fulfills an acceleration level condition, the processing circuitry 102 is configured to control the powertrain system 11 from the first freewheeling mode FM1 to the coasting mode CM, allowing the vehicle 10 to accelerate until reaching the vehicle target speed. The vehicle target speed is typically controlled by the predictive cruise control system 55.

Alternatively, if the powertrain system 11 is operating in the second freewheeling mode FM2, the processing circuitry 102 is configured to determine to maintain the second freewheeling mode FM2, allowing the vehicle 10 to accelerate until reaching the vehicle target speed, or accelerate until a braking condition is fulfilled.

The vehicle target speed is typically controlled by the predictive cruise control system 55. Accordingly, the operation of determining when the vehicle target speed is reached by the vehicle is performed by comparing vehicle speed with the vehicle target speed.

Regarding the braking condition, the processing circuitry is here configured to determine fulfillment of the braking condition by predicting a maximum vehicle speed for the engine braking mode EBM, and determine that the braking condition is fulfilled if the predicted maximum vehicle speed exceeds the vehicle target speed. More specifically, the braking condition is fulfilled if the predicted maximum vehicle speed (for the engine braking mode) exceeds the vehicle target speed during the second freewheeling mode FM2. In this context, vehicle target speed typically refers to the allowable vehicle speed.

The maximum vehicle speed for the engine braking mode EBM is predicted by the processing circuitry 102 from acquired topography data and vehicle data. More specifically, the predicted maximum vehicle speed for the engine braking mode EBM is here predicted from topography data and vehicle data including gradient of the slope, length of the slope, and mass of the vehicle. The data may also include data indicative of rolling resistance, mechanical resistance and aerodynamic drag for a more precise prediction.

The braking condition is thus typically determined by the processing circuitry 102 based on topography data and vehicle data.

Alternatively, or in addition, the processing circuitry 102 is configured to predict the maximum vehicle speed for the engine braking mode EBM by determining available engine braking power for the engine braking mode EBM and required engine braking power for the engine braking mode EBM. The braking condition is thus fulfilled if the required engine braking power exceeds the available engine braking power.

Alternatively, or in addition, the processing circuitry 102 is configured to determine fulfillment of the braking condition by comparing available engine braking power with required engine braking power, and wherein the braking condition is fulfilled if the required engine braking power exceeds the available engine braking power.

The required engine braking power is here indicative of an engine braking power required for maintaining the vehicle at the vehicle target speed during a downhill road segment.

For example, the required engine braking power is predicted based on topography data and vehicle data. In addition, the available engine braking power is predicted based on determining which gear is to be used during the engine braking mode EBM.

Typically, the processing circuitry 102 is configured to, upon the vehicle 10 reaching the vehicle target speed in the second freewheeling mode FM2, directly switch from the second freewheeling mode FM2 to the engine braking mode EBM, thereby by-passing the coasting mode CM.

Moreover, the processing circuitry 102 is typically configured to, upon a fulfillment of the braking condition in the second freewheeling mode FM2, directly switch from the second freewheeling mode FM2 to the engine braking mode EBM, thereby by-passing the coasting mode CM.

Typically, the processing circuitry 102 is also configured to determine to maintain the second freewheeling mode FM2 based on a predicted available engine braking power. By way of example, the processing circuitry 102 is configured to predict the available engine braking power by further determining which gear is to be used during the engine braking mode.

Moreover, in some examples, if the powertrain system 11 is operating in the second freewheeling mode FM2, the processing circuitry 102 is configured to determine a starting time for a needed engine braking operation.

Typically, the processing circuitry 102 is also configured to determine that a freewheeling mode condition is fulfilled based on the acquired topography data and vehicle data by determining one or more inhibitors to set the internal combustion engine in a state in which the output shaft of the internal combustion engine is non-rotating.

The braking operation of the engine 12 can be provided in several different ways. Typically, the processing circuitry is configured to generate the braking effect in the engine braking mode by actively controlling the engine to increase the internal resistance within the engine. For example, the processing circuitry 102 is configured to generate the braking effect in the engine braking mode by controlling the internal combustion engine to release compressed air in one or more cylinders.

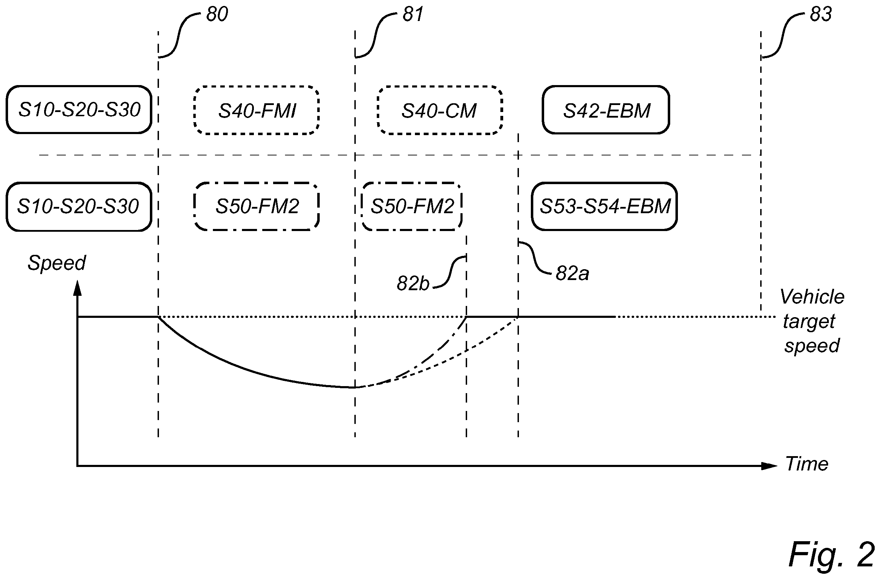

FIG. 2 illustrates an example of controlling a powertrain system of a vehicle, such as the powertrain system 11 of the vehicle 10 of FIG. 1, along a road, i.e. along an intended route for the vehicle 10. More specifically, FIG. 2 schematically illustrates a heavy-duty vehicle in the form of a loaded truck 10 driving uphill, over a crest and downhill, in which the computer system 100 is used to control the powertrain system 11 according to the multiple modes, as described herein.

For ease of reference, an extension of the intended route is here indicated by a number of locations 80, 81, 82 (82a, 82b), and 83, along the road. The road segment between location 80 and location 81 is indicative of an uphill road segment, location 81 is indicative of a crest - or slightly after the crest, and the road segment between location 81 and location 82 indicative of a downhill segment. In this example, the location 82 is indicative of a position of the vehicle 10 where the vehicle 10 reaches, or travels at, the cruise set speed, corresponding to the vehicle target speed. At location 82, the vehicle 10 switches from the current operational mode to the engine braking mode EBM, as further described below. Moreover, as illustrated in FIG. 2, location 83 is indicative of a location further along the route, where the powertrain system 11 of the vehicle 10 is typically maintained in the engine braking mode EBM, or has transitioned to another operational mode depending on the topography. It should be noted that the crest is the highest point of a hill or slope in a road.

Along the route, the processing circuitry 102 acquires data from the predictive cruise control system 55 to determine and set a target speed for the vehicle 10. In this manner, the processing circuitry 102 determines the vehicle target speed for the vehicle 10. In this example, the processing circuitry 102 determines the vehicle target speed for the vehicle 10 as it travels uphill at location 80. The processing circuitry 102 may likewise determine, or estimate, the vehicle target speed for the vehicle 10 as it approaches the crest at 81 and the downhill segment at 82.

Moreover, at location 80, the processing circuitry 102 determines whether the powertrain system 11 should enter, or be operated, in one of the freewheeling modes along the route, e.g. on the crest, over the crest, at the location 81 just after the crest, and/or at the downhill segment between 81 and 82. In this example, the operation of determining whether the powertrain system 11 should enter, or be operated, in one of the freewheeling modes along the route, e.g. on the crest, over the crest, at location 81, and/or at the downhill segment between 81 and 82 is performed in predictive manner.

The decision to enter one of the freewheeling modes FM is typically based on an analysis of vehicle data (such as mass of the vehicle) and topography data (e.g. road gradient). Typically, the processing circuitry 102 is configured to continuously simulate the speed behavior of the vehicle so as to determine whether a freewheeling mode condition is fulfilled. As such, the processing circuitry 102 determines whether the vehicle 10 can be freewheeling along the road without falling below a minimum allowable speed. The processing circuitry 102 thus determines that vehicle 10 is capable of entering either the first freewheeling mode FM1 or the second freewheeling mode FM2 without the speed dropping below a predetermined lower limit, which is deemed acceptable or safe for the road conditions ahead, including any remaining uphill segments, crests, and downhill segments. It should also be noted that the processing circuitry 102 may incorporate additional data into the determination process, such as aerodynamics data and road surface friction.

In particular, the processing circuitry 102 determines a freewheeling mode condition for the powertrain system 11 of the vehicle 10 either before reaching the crest or, in some instances, upon reaching the crest itself. The processing circuitry 102 determines the suitability of entering one of the freewheeling modes FM based on acquired vehicle data, such as the mass of vehicle 10, in combination with topography data, such as road gradient or inclination. The acquired vehicle data and topography data are decisive for determining whether the powertrain system 11 should be set into the first freewheeling mode FM1 or the second freewheeling mode FM2. For example, the decision is made through a comparison with one or more threshold levels and/or by comparing against previous vehicle data stored in memory as a look-up table.

In one extended version of the example, the processing circuitry 102 also evaluates whether any inhibitors would prevent the engine 12 from being shut down along the route. Determining any inhibitors for shutting down the engine 12 may be decisive for determining whether the powertrain system 11 should be set into the first freewheeling mode FM1 or the second freewheeling mode FM2. In the absence of inhibitors, the engine 12 is allowed to shut down by setting the output shaft 13 in the non-rotating state. The operation of estimating any inhibitors that prevent shutting down the engine 12 along the route may e.g. comprise determining a temperature of the clutch 14. For example, this operation (step) of the processing circuitry 102 is based on predicting the use of the clutch 14 for a necessary engine restart during the second freewheeling mode FM2, wherein the engine's output shaft 13 is in a non-rotating state.

Moreover, whether before the crest, on the crest, or at location 81 immediately after the crest, the processing circuitry 102 determines whether the powertrain system 11 is operating in either the first freewheeling mode FM1 or the second freewheeling mode FM2. Based on this assessment, the processing circuitry 102 then dictates the operation of the powertrain system 11 in various ways, as detailed herein. The objective of these operational adjustments is to enhance fuel efficiency, reduce engine wear, and maintain the vehicle's target speed, as determined by the predictive cruise control system 55. In addition, the processing circuitry 102 is here configured to make a difference on the continued operation of the powertrain system 11 depending on the current freewheeling mode on the crest, and/or at the location 81. Therefore, the processing circuitry 102 determines whether the powertrain system 11 is operating in the first freewheeling mode FM1 or the second freewheeling mode FM2 on the crest 81.

For example, if the powertrain system 11 is operating in the first freewheeling mode FM1 and the acceleration level fulfills an acceleration level condition, the processing circuitry 102 determines to control the powertrain system 11 from the first freewheeling mode FM1 to the coasting mode CM during the downhill segment between 81 and 82, allowing the vehicle 10 to accelerate until reaching the vehicle target speed.

For ease of reference, the location 82 is referred to as location 82a for a situation when the powertrain system 11 is operating in the first freewheeling mode FM1 and location 82b when the powertrain system 11 is operating in the second freewheeling mode FM2, which may be gleaned from FIG. 2.

In addition, whether before the crest, on the crest, or at location 81 immediately after the crest, the processing circuitry 102 determines the acceleration level condition. In particular, the processing circuitry 102 determines whether the acceleration of the vehicle 10 amounts to a positive acceleration level. A positive acceleration level typically refers to instances where the instantaneous acceleration of the vehicle 10 is positive, indicating that the vehicle 10 is speeding up at that specific moment. As such, the rate of change of velocity is calculated. If the rate of change of velocity is positive, the processing circuitry 102 determines that there is an increase in vehicle speed. By determining that the acceleration level condition is a positive acceleration level, it becomes possible to determine that there is a possibility of switching from the first freewheeling mode FM1 to the coasting mode CM, allowing the vehicle 10 to accelerate until reaching the target speed, as indicated by the road segment between location 81 and 82 (82a, 82b). As such, in the first freewheeling mode FM1, and upon meeting the acceleration level condition, the processing circuitry 102 controls the powertrain system 11 from the first freewheeling mode FM1 to the coasting mode CM, allowing acceleration until the vehicle 10 reaches the target speed.

Determining that the target speed is reached is typically performed by the processing circuitry 102 in collaboration with the cruise control system 55, as commonly known in the art.

Subsequently, when the powertrain system 11 is operating in the coasting mode CM, the processing circuitry 102 typically evaluates the available braking power and control the powertrain system 11 from the coasting mode CM to the braking mode EBM, when a braking condition is fulfilled.

On the other hand, if the powertrain system 11 is operating in the second freewheeling mode, the processing circuitry 102 determine to maintain the second freewheeling mode FM2, allowing the vehicle 10 to accelerate until reaching the vehicle target speed, or until the braking condition is fulfilled.

Determining that the target speed is reached is typically performed by the processing circuitry 102 in collaboration with the cruise control system 55, as commonly known in the art.

Determining fulfillment of the braking condition can be performed in several different ways by the computer system 100. For example, the processing circuitry 102 determines fulfillment of the braking condition by predicting a maximum vehicle speed for the engine braking mode. The processing circuitry 102 then determines that the braking condition is fulfilled if the predicted maximum vehicle speed exceeds the vehicle target speed.

More specifically, the braking condition is determined to be fulfilled if the predicted maximum vehicle speed (for the engine braking mode) exceeds the vehicle target speed during the second freewheeling mode FM2. In this context, vehicle target speed typically refers to the allowable vehicle speed. The maximum vehicle speed for the engine braking mode is typically predicted from topography data and vehicle data.

For example, the predicted maximum vehicle speed for the engine braking mode is predicted from topography data and vehicle data including data indicative of the gradient of the slope, the length of the slope, and the mass of the vehicle.

Alternatively, or in addition, predicting a maximum vehicle speed for the engine braking mode EBM comprises determining available engine braking power for the engine braking mode EBM and required engine braking power for the engine braking mode EBM. Moreover, the processing circuitry 102 determined that the braking condition is fulfilled if the required engine braking power exceeds the available engine braking power.

The processing circuitry 102 may also determine fulfillment of the braking condition by directly comparing required and available braking power. Hence, the processing circuitry 102 is here also configured to determine fulfillment of the braking condition by comparing available engine braking power with required engine braking power, wherein the braking condition is determined to be fulfilled if the required engine braking power exceeds the available engine braking power.

Typically, the required engine braking power is indicative of an engine braking power required for maintaining the vehicle at the vehicle target speed during a downhill road segment. For example, the required engine braking power is predicted based on topography data and vehicle data.

The available engine braking power is typically predicted based on determining which gear is to be used during the engine braking mode. Predicting the available engine braking power by further determining which gear is to be used during the engine braking mode EBM can e.g. be performed by simulating vehicle speed change with different possible gears engaged in the transmission. To this end, the operation of directly switching from the second freewheeling mode FM2 to the engine braking mode EBM is here also based on available gears of the transmission.

It should be noted that also when the powertrain system 11 is operating in the second freewheeling mode FM2, the processing circuitry 102 optionally also determines the acceleration level condition. In particular, the processing circuitry 102 determines whether the acceleration of the vehicle amounts to a positive acceleration level. A positive acceleration level typically refers to instances where the instantaneous acceleration of the vehicle 10 is positive, indicating that the vehicle is speeding up at that specific moment. As such, the rate of change of velocity is calculated. If the rate of change of velocity is positive, the processing circuitry 102 determines that there is an increase in vehicle speed. By determining that the acceleration level condition is a positive acceleration level, it becomes possible to determine that there is a possibility of maintaining the second freewheeling mode FM2, allowing the vehicle 10 to accelerate until reaching the vehicle target speed, or until a braking condition is fulfilled, as indicated by the road segment between location 81 and 82.

In addition, in this example, when the powertrain system 11 is operating in the second freewheeling mode FM2, the processing circuitry 102 may determine to maintain the second freewheeling mode FM2 based on the predicted available engine braking power.

Moreover, when the powertrain system 11 is operating in the second freewheeling mode FM2 along the downhill segment between 81 and 82b, the processing circuitry 102 typically estimates whether the coasting mode CM can be by-passed when the vehicle target speed is reached, or when the braking condition is fulfilled. The processing circuitry 102 typically also determines the suitability of by-passing the coasting mode based on any one of topography data and vehicle data.

As such, upon the vehicle 10 reaching the vehicle target speed in the second freewheeling mode FM2, at location 82b in FIG. 2, the processing circuitry 102 determines to directly switch from the second freewheeling mode FM2 to the engine braking mode EBM, thereby by-passing the coasting mode CM, as illustrated in FIG. 2. In addition, or alternatively, upon the fulfillment of the braking condition in the second freewheeling mode FM2, at location 82b in FIG. 2, the processing circuitry 102 determines to directly switch from the second freewheeling mode FM2 to the engine braking mode EBM, thereby by-passing the coasting mode CM, as illustrated in FIG. 2.

By operating the powertrain system 11 to by-pass the coasting mode CM, the time the vehicle 10 is freewheeling with non-rotating output shaft 13 (i.e. with the engine shutdown) is extended, effectively reducing the duration spent below the target speed. Thus, by delaying the restart of the engine 12 for braking until it is necessary, the vehicle 10 can maintain closer to its target speed for a longer period, enhancing overall fuel efficiency and reducing the need for fuel-powered acceleration to return to the target speed. When vehicle target speed is reached, or when the braking condition is met, the engagement of engine braking allows for timely deceleration without the intermediate step of coasting, where the engine 12 might idle without contributing to propulsion or braking.

In addition, before the crest, on the crest, or at the location 81, the processing circuitry 102 typically also predict the required engine braking power to maintain the target speed, based on topography data and vehicle data. The required engine braking power is predicted based on topography data and vehicle data.

Furthermore, if the powertrain system 11 is operating in the second freewheeling mode FM2 on the crest, or at the location 81, the processing circuitry 102 typically also determine a starting time for a needed engine braking operation. Before engine braking mode operation, the engine 12 is also restarted by the clutch 14, or the starter motor, as described herein.

In the engine braking mode EBM, an engine brake operation is obtained when the engine 12 has started, and is further engaged to the transmission 17, and without initiating fuel injection to the engine 12. Hereby, the braking effect is generated in the engine braking mode by actively controlling the engine 12 to increase the internal resistance within the engine 12. For example, the braking effect is generated in the engine braking mode by controlling the engine 12 to release compressed air in one or more cylinders of the engine 12.

In some examples, the braking operation may also include additional braking systems such as a retarder.

By switching between the different operational modes, i.e. the first and second freewheeling modes, the coasting mode, and the engine braking mode, the computer system 100 provides for enhanced fuel usage based on driving conditions, topography, and vehicle data. In the freewheeling modes, the disconnection of the engine from the drive wheels reduces fuel consumption during periods when propulsion is not needed. The coasting mode further enhances fuel efficiency by interrupting fuel supply while maintaining connection to the drive wheels, utilizing the vehicle's momentum.

In particular, by allowing the engine to shutdown (i.e. to set the output shaft in a non-rotating state) in the second freewheeling mode, it becomes possible to reduce fuel consumption and emissions even further. Moreover, by freewheeling with engine off, the exhaust aftertreatment system may not receive cold exhaust from the engine, as compared to an operation in a coasting mode with the driveline engaged and air moving through the engine. The exhaust aftertreatment system can therefore better keep its working temperature.

The ability to dynamically switch to the engine braking mode provides controlled deceleration, which is particularly beneficial in heavy-duty vehicles that often carry significant loads. This controlled deceleration is safer and more efficient than relying solely on traditional brake systems, especially in downhill scenarios where sustained braking can lead to brake overheating.

Moreover, by determining vehicle target speed and adjust the powertrain's operational mode accordingly, allows for adaptive speed regulation. This ensures that the vehicle 10 maintains a desired speed in various conditions without unnecessary fuel consumption or excessive wear on the engine and transmission system.

As mentioned herein, the computer system 100 may be an integral part of the powertrain system 11, wherein the powertrain system 11 comprises at least the engine 12, the controllable clutch 14, the transmission 17 arranged to be coupled to the engine 12 by means of the controllable clutch 14, and wherein the transmission 17 further comprises the output shaft 18 configured to be coupled to the driven axle 24 of a set of wheels 20, 21.

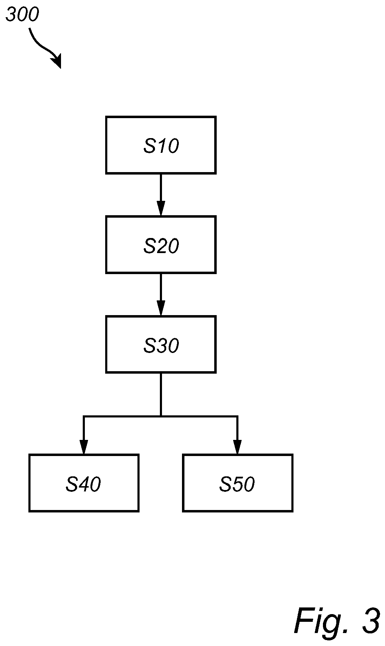

FIG. 3 is a flow chart of a method according to an example. More specifically FIG. 3 is an exemplary computer implemented method 300 according to an example. The computer-implemented method 300 is intended for controlling the powertrain system 11 of the heavy-duty vehicle 10 in FIG. 1. The method is typically implemented by the processing circuitry 102.

As mentioned above in relation to FIG. 1, the powertrain system 11 is selectively operable in the first freewheeling mode FM1, the second freewheeling mode FM2, the coasting mode CM, and in the engine braking mode EBM.

As illustrated in FIG. 3, the computer-implemented method 300 comprises a step of determining S10, by the processing circuitry 102 of the computer system 100, a vehicle target speed of the vehicle. By way of example, the processing circuitry 102 is configured to acquire data indicative of the vehicle target speed from the predictive cruise control system 55.

Moreover, the computer-implemented method 300 comprises a step of determining S20, by the processing circuitry 102 of the computer system 100, that a freewheeling mode condition is fulfilled based on any one of topography data and vehicle data.

Further, the computer-implemented method 300 comprises a step of determining S30, by the processing circuitry 102 of the computer system 100, that the powertrain system 11 is operating in either the first freewheeling mode FM1 or the second freewheeling mode FM2.

In a powertrain system state when the powertrain system 11 is operating in the first freewheeling mode FM1 and an acceleration level fulfills an acceleration level condition, the computer-implemented method 300 comprises a step of controlling S40, by the processing circuitry 102 of the computer system 100, the powertrain system 11 from the first freewheeling mode FM1 to the coasting mode CM, allowing the vehicle 10 to accelerate until reaching the vehicle target speed.

In addition, in a powertrain system state when the powertrain system 11 is operating in the second freewheeling mode FM2, the computer-implemented method 300 comprises a step of determining S50, by the processing circuitry 102 of the computer system 100, to maintain the second freewheeling mode FM2, allowing the vehicle 10 to accelerate until reaching the vehicle target speed, or accelerate until a braking condition is fulfilled.

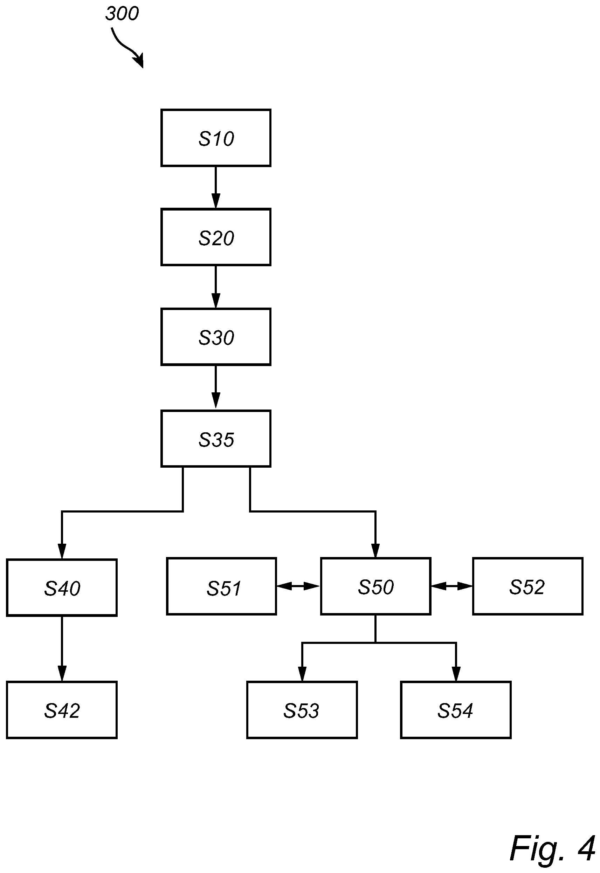

FIG. 4 is a flow chart of an extended example of a method according to an example. More specifically FIG. 4 is an exemplary computer implemented method 300 according to an example. The computer-implemented method 300 of FIG. 4 is also intended for controlling the powertrain system 11 of the heavy-duty vehicle 10 in FIG. 1. The method is typically implemented by the processing circuitry 102. As mentioned above in relation to FIGS. 1 and 2, the powertrain system 11 is selectively operable in the first freewheeling mode FM1, the second freewheeling mode FM2, the coasting mode CM, and in the engine braking mode EBM. The method 300 here also comprises the steps and features of the method of FIG. 3.

As illustrated in FIG. 4, the computer-implemented method 300 comprises the step of determining S10, by the processing circuitry 102 of the computer system 100, a vehicle target speed of the vehicle. By way of example, the processing circuitry 102 is configured to acquire data indicative of the vehicle target speed from the predictive cruise control system 55.

Moreover, the computer-implemented method 300 comprises the step of determining S20, by the processing circuitry 102 of the computer system 100, that a freewheeling mode condition is fulfilled based on any one of topography data and vehicle data.

In FIG. 4, the step of determining that a freewheeling mode condition is fulfilled based on topography data and vehicle data also comprises a step of determining one or more inhibitors to set the internal combustion engine in a state in which the output shaft 13 of the engine 12 is non-rotating. If no inhibitors are identified, the engine 12 is typically allowed to be shut-down, i.e. the output shaft 13 is set in the non-rotating state.

Further, the computer-implemented method 300 comprises the step of determining S30, by the processing circuitry 102 of the computer system 100, that the powertrain system 11 is operating in either the first freewheeling mode FM1 or the second freewheeling mode FM2.

Moreover, in FIG. 4, the method 300 further comprises a step of predicting S35 the required engine braking power to maintain the vehicle 10 at the vehicle target speed during a downhill road segment. The predicted required engine braking power is here determined based on topography data and vehicle data.

If the method determines that the powertrain system 11 is operating in the first freewheeling mode FM1, and subsequently that an acceleration level fulfills an acceleration level condition, the computer-implemented method 300 comprises a step of controlling S40, by the processing circuitry 102 of the computer system 100, the powertrain system 11 from the first freewheeling mode FM1 to the coasting mode CM, allowing the vehicle 10 to accelerate until reaching the vehicle target speed.

Subsequently, when the powertrain system 11 is operating in the coasting mode CM, the computer-implemented method 300 here comprises a step of controlling S42 the powertrain system 11 from the coasting mode CM to the engine braking mode EBM, when a braking condition is fulfilled. The braking condition can be determined to be fulfilled as described herein. In other words, when the powertrain system 11 is operating in the first freewheeling mode FM1, the transition to the engine braking mode EBM is always performed via an initial switch from the first freewheeling mode FM1 to the coasting mode CM, allowing the vehicle 10 to accelerate until reaching the vehicle target speed, and the from the coasting mode CM to the engine braking mode EBM.

In addition, if the method determines that the powertrain system 11 is operating in the second freewheeling mode FM2, the computer-implemented method 300 comprises a subsequent step of determining S50, by the processing circuitry 102 of the computer system 100, to maintain the second freewheeling mode FM2, allowing the vehicle 10 to accelerate until reaching the vehicle target speed, or until a braking condition is fulfilled.

In FIG. 4, when the powertrain system 11 is in the second freewheeling mode FM2, the method 300 here further comprises a step of determining S51 to maintain the second freewheeling mode FM2 based on a predicted available engine braking power. The available engine braking power is here predicted by further determining which gear is to be used during the engine braking mode.

Moreover, as described in relation to FIGS 1 and 2, the method 300 may comprise a step of determining fulfillment of the braking condition by predicting a maximum vehicle speed for the engine braking mode, and determining that the braking condition is fulfilled if the predicted maximum vehicle speed exceeds the vehicle target speed. More specifically, the braking condition is determined to be fulfilled if the predicted maximum vehicle speed (for the engine braking mode) exceeds the vehicle target speed during the second freewheeling mode. In this context, vehicle target speed typically refers to the allowable vehicle speed. The maximum vehicle speed for the engine braking mode is predicted from topography data and vehicle data. The predicted maximum vehicle speed for the engine braking mode is predicted from topography data and vehicle data including gradient of the slope, length of the slope, and mass of the vehicle.

In addition, or alternatively, as described in relation to FIGS 1 and 2, the method 300 may comprise a step of predicting a maximum vehicle speed for the engine braking mode by determining available engine braking power for the engine braking mode and required engine braking power for the engine braking mode, and wherein the braking condition is fulfilled if the required engine braking power exceeds the available engine braking power.

Further, as described in relation to FIGS 1 and 2, the method 300 may comprise a step of determine fulfillment of the braking condition by comparing available engine braking power with required engine braking power, and wherein the braking condition is fulfilled if the required engine braking power exceeds the available engine braking power. The required engine braking power is here indicative of an engine braking power required for maintaining the vehicle at the vehicle target speed during a downhill road segment. The required engine braking power is predicted based on topography data and vehicle data. The available engine braking power is predicted based on determining which gear is to be used during the engine braking mode.

Moreover, in FIG. 4, when the powertrain system 11 is in the second freewheeling mode FM2, the method 300 here further comprises a step of determining S52 the starting time for a needed engine braking operation.

Subsequently, when the powertrain system 11 is in the second freewheeling mode FM2, the method 300 here further comprises a step of estimating when the powertrain system 11 should switch from the second freewheeling mode FM2 to the engine braking mode EBM. More specifically, as mentioned above, the powertrains system 11 is in the second freewheeling mode FM2 until reaching the vehicle target speed, or until the braking condition is fulfilled.

Thus, as illustrated in FIG. 4, the method 300 here further comprises a step of directly switching S53, upon the vehicle reaching the vehicle target speed in the second freewheeling mode FM2, from the second freewheeling mode FM2 to the engine braking mode EBM, thereby by-passing the coasting mode CM.

In addition, or alternatively, method 300 further comprises a step of directly switching S54, upon the fulfillment of the braking condition in the second freewheeling mode FM2, from the second freewheeling mode FM2 to the engine braking mode EBM, thereby by-passing the coasting mode CM.

Typically, in the engine braking mode EBM, the method comprises a step of generating the braking effect in the engine braking mode EBM by actively controlling the engine 12 to increase the internal resistance within the engine 12, such as by controlling the engine 12 to release compressed air in one or more cylinders.

It should be noted that the computer system 100 may be an integral part of the powertrain system 11. In other examples, the computer system 100 and the powertrain system 11 may be separate parts configured to communicate with each other. The computer system 100 may also be a part of a remote server or the like. Hence, in some examples, there is provided a system comprising the powertrain system 11 and the computer system 100, wherein the computer system 100 is configured to be in communication with the powertrain system 11 so as to control the powertrain system 11 of the vehicle 10.

In some examples, there is provided a computer program product comprising program code for performing, when executed by the processing circuitry 102, the method 300 as described above.

In some examples, there is provided a non-transitory computer-readable storage medium comprising instructions, which when executed by the processing circuitry 102, cause the processing circuitry 102 to perform the method 300 as described above.

Further details of one example of a computer system that can be used as the computer system 100 will now be described in relation to FIG. 5.

FIG. 5 is a schematic diagram of a computer system 400 for implementing examples disclosed herein. The computer system 400 is adapted to execute instructions from a computer-readable medium to perform these and/or any of the functions or processing described herein. The computer system 400 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 400 may include any collection of devices that individually or jointly execute a set (or multiple sets) of instructions to perform any one or more of the methodologies discussed herein. Accordingly, any reference in the invention and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 400 may comprise at least one computing device or electronic device capable of including firmware, hardware, and/or executing software instructions to implement the functionality described herein. The computer system 400 may include processing circuitry 402 (e.g., processing circuitry including one or more processor devices or control units), a memory 404, and a system bus 406. The computer system 400 may include at least one computing device having the processing circuitry 402. The system bus 406 provides an interface for system components including, but not limited to, the memory 404 and the processing circuitry 402. The processing circuitry 402 may include any number of hardware components for conducting data or signal processing or for executing computer code stored in memory 404. The processing circuitry 402 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 402 may further include computer executable code that controls operation of the programmable device.

The system bus 406 may be any of several types of bus structures that may further interconnect to a memory bus (with or without a memory controller), a peripheral bus, and/or a local bus using any of a variety of bus architectures. The memory 404 may be one or more devices for storing data and/or computer code for completing or facilitating methods described herein. The memory 404 may include database components, object code components, script components, or other types of information structure for supporting the various activities herein. Any distributed or local memory device may be utilized with the systems and methods of this description. The memory 404 may be communicably connected to the processing circuitry 402 (e.g., via a circuit or any other wired, wireless, or network connection) and may include computer code for executing one or more processes described herein. The memory 404 may include non-volatile memory 408 (e.g., read-only memory (ROM), erasable programmable read-only memory (EPROM), electrically erasable programmable read-only memory (EEPROM), etc.), and volatile memory 410 (e.g., random-access memory (RAM)), or any other medium which can be used to carry or store desired program code in the form of machine-executable instructions or data structures and which can be accessed by a computer or other machine with processing circuitry 402. A basic input/output system (BIOS) 412 may be stored in the non-volatile memory 408 and can include the basic routines that help to transfer information between elements within the computer system 400.

The computer system 400 may further include or be coupled to a non-transitory computer-readable storage medium such as the storage device 414, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 414 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 414 and/or in the volatile memory 410, which may include an operating system 416 and/or one or more program modules 418. All or a portion of the examples disclosed herein may be implemented as a computer program 420 stored on a transitory or non-transitory computer-usable or computer-readable storage medium (e.g., single medium or multiple media), such as the storage device 414, which includes complex programming instructions (e.g., complex computer-readable program code) to cause the processing circuitry 402 to carry out actions described herein. Thus, the computer-readable program code of the computer program 420 can comprise software instructions for implementing the functionality of the examples described herein when executed by the processing circuitry 402. In some examples, the storage device 414 may be a computer program product (e.g., readable storage medium) storing the computer program 420 thereon, where at least a portion of a computer program 420 may be loadable (e.g., into a processor) for implementing the functionality of the examples described herein when executed by the processing circuitry 402. The processing circuitry 402 may serve as a controller or control system for the computer system 400 that is to implement the functionality described herein.

The computer system 400 may include an input device interface 422 configured to receive input and selections to be communicated to the computer system 400 when executing instructions, such as from a keyboard, mouse, touch-sensitive surface, etc. Such input devices may be connected to the processing circuitry 402 through the input device interface 422 coupled to the system bus 406 but can be connected through other interfaces, such as a parallel port, an Institute of Electrical and Electronic Engineers (IEEE) 1394 serial port, a Universal Serial Bus (USB) port, an IR interface, and the like. The computer system 400 may include an output device interface 424 configured to forward output, such as to a display, a video display unit (e.g., a liquid crystal display (LCD) or a cathode ray tube (CRT)). The computer system 400 may include a communications interface 426 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The term "operatively connected", as used herein, typically means that a first component is in operative relation to another second component. By way of example, the term operatively connected means that the first component is connectable, or connected, to the second component in a manner allowing a transfer of a rotational movement and/or rotational torque from the first component to the second component. Therefore, the term encompasses a functional construction in which two components are connected such that the rotational speed of the first component corresponds to the rotational speed of the second component. However, the term also encompasses a functional construction in which there is a ratio between the rotational movement of the first component and the rotational movement of the second component, i.e., the rotational speed of the second component is proportional to the rotational speed of the first component.

The terminology used herein is for the purpose of describing particular aspects only and is not intended to be limiting of the invention. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present invention.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this invention belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present invention is not limited to the aspects described above and illustrated in the drawings; rather, the skilled person will recognize that many changes and modifications may be made within the scope of the appended claims. In the drawings and specification, there have been disclosed aspects for purposes of illustration only and not for purposes of limitation, the scope of the invention being set forth in the following claims.

## Claims

1. A computer system (100) for controlling a powertrain system (11) of a vehicle (10), the powertrain system comprising an internal combustion engine (12) connectable to one or more drive wheels, the computer system comprising processing circuitry (102) configured to selectively operate the powertrain system in:
a first freewheeling mode (FM1), in which an output shaft of the engine is rotating, the engine is disconnected from the one or more drive wheels, and fuel is being supplied to the engine;
a second freewheeling mode (FM2), in which the output shaft of the engine is non-rotating, and the engine is disconnected from the one or more drive wheels;
a coasting mode (CM), in which the output shaft of the engine is rotating, the engine is connected to the one or more drive wheels, and fuel supply to the engine is interrupted; and
an engine braking mode (EBM), in which the output shaft of the engine is rotating, the engine is connected to the one or more drive wheels, and the engine is further being operated so as to generate a braking effect;
wherein the processing circuitry (102) is further configured to:
- determine a vehicle target speed;
- determine that a freewheeling mode condition is fulfilled based on any one of topography data and vehicle data;
- determine that the powertrain system is operating in either the first freewheeling mode or the second freewheeling mode;
**characterized in that**:
- if the powertrain system is operating in the first freewheeling mode and an acceleration level fulfills an acceleration level condition, control the powertrain system from the first freewheeling mode to the coasting mode, allowing the vehicle to accelerate until reaching the vehicle target speed; and
- if the powertrain system is operating in the second freewheeling mode, further determine to maintain the second freewheeling mode, allowing the vehicle to accelerate until reaching the vehicle target speed, or until a braking condition is fulfilled.

2. Computer system according to claim 1, wherein the processing circuitry is configured to, upon the vehicle reaching the vehicle target speed in the second freewheeling mode, directly switch from the second freewheeling mode to the engine braking mode, thereby by-passing the coasting mode.

3. Computer system according to claim 1 or claim 2, wherein the processing circuitry is configured to, upon a fulfillment of the braking condition in the second freewheeling mode, directly switch from the second freewheeling mode to the engine braking mode, thereby by-passing the coasting mode.

4. Computer system according to any one of claims 1 to 3, wherein the vehicle target speed is controlled by a predictive cruise control system (55).

5. Computer system according to any one of claims 1 to 4, wherein the processing circuitry is configured to determine fulfillment of the braking condition by predicting a maximum vehicle speed for the engine braking mode, and determine that the braking condition is fulfilled if the predicted maximum vehicle speed exceeds the vehicle target speed.

6. Computer system according to claim 5, wherein the maximum vehicle speed for the engine braking mode is predicted from topography data and vehicle data.

7. Computer system according to claim 5 or claim 6, wherein predicting a maximum vehicle speed for the engine braking mode comprises determining available engine braking power for the engine braking mode and required engine braking power for the engine braking mode, and wherein the braking condition is fulfilled if the required engine braking power exceeds the available engine braking power.

8. Computer system according to any one of claims 1 to 4, wherein the processing circuitry is configured to determine fulfillment of the braking condition by comparing available engine braking power with required engine braking power, and wherein the braking condition is fulfilled if the required engine braking power exceeds the available engine braking power.

9. Computer system according to any one of preceding claims, wherein the processing circuitry is configured to determine that a freewheeling mode condition is fulfilled based on vehicle data indicative of one or more inhibitors to set the engine in a state, in which the output shaft of the engine is non-rotating.

10. Computer system according to any one of preceding claims, wherein the processing circuitry is configured to generate the braking effect in the engine braking mode by actively controlling the engine to increase the internal resistance within the engine.

11. A powertrain system (11) comprising a computer system (100) according to any one of claims 1 to 10, an internal combustion engine (12), a controllable clutch (14), a transmission (17) arranged to be coupled to the internal combustion engine by means of the controllable clutch, and wherein the transmission further comprises an output shaft (18) configured to be coupled to a driven axle (24) of a set of wheels (20, 21).

12. A vehicle (1) comprising a computer system of any of the claims 1-10 or a powertrain system according to claim 11.

13. A computer-implemented method (300) for controlling a powertrain system (11) of a vehicle (10), the powertrain system comprising an internal combustion engine (12) connectable to one or more drive wheels, the powertrain system being selectively operable in: a first freewheeling mode (FM1), in which an output shaft of the ICE is rotating, the engine is disconnected from the one or more drive wheels, and fuel is being supplied to the engine; a second freewheeling mode (FM2), in which the output shaft of the engine is non-rotating, and the engine is disconnected from the one or more drive wheels; a coasting mode (CM), in which the output shaft of the engine is rotating, the engine is connected to the one or more drive wheels, and fuel supply to the engine is interrupted; and an engine braking mode (EBM), in which the output shaft of the engine is rotating, the engine is connected to the one or more drive wheels, and the engine is further being operated so as to generate a braking effect;
wherein the method comprises:
- determining (S10), by a processing circuitry of a computer system, a vehicle target speed;
- determining (S20), by the processing circuitry of the computer system, that a freewheeling mode condition is fulfilled based on any one of topography data and vehicle data;
- determining (S30), by the processing circuitry of the computer system, that the powertrain system is operating in either the first freewheeling mode or the second freewheeling mode;
**characterized in that**:
- if the powertrain system is operating in the first freewheeling mode and an acceleration level fulfills an acceleration level condition, controlling (S40), by the processing circuitry of the computer system, the powertrain system from the first freewheeling mode to the coasting mode, allowing the vehicle to accelerate until reaching the vehicle target speed; and
- if the powertrain system is operating in the second freewheeling mode, further determining (S50), by the processing circuitry of the computer system, to maintain the second freewheeling mode, allowing the vehicle to accelerate until reaching the vehicle target speed or until a braking condition is fulfilled.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.

## Patentansprüche

1. Computersystem (100) zum Steuern eines Antriebsstrangsystems (11) eines Fahrzeugs (10), wobei das Antriebsstrangsystem einen Verbrennungsmotor (12) umfasst, der mit einem oder mehreren Antriebsrädern verbunden werden kann, wobei das Computersystem einen Verarbeitungsschaltkreis (102) umfasst, der dazu konfiguriert ist, das Antriebsstrangsystem selektiv in Folgendem zu betreiben:
einem ersten Freilaufmodus (FM1), in dem sich die Abtriebswelle des Motors dreht, der Motor von dem einen oder den mehreren Antriebsrädern getrennt ist und dem Motor Kraftstoff zugeführt wird;
einem zweiten Freilaufmodus (FM2), in dem sich die Abtriebswelle des Motors nicht dreht und der Motor von dem einen oder den mehreren Antriebsrädern getrennt ist;
einem Segelmodus (CM), in dem sich die Abtriebswelle des Motors dreht, der Motor mit dem einen oder den mehreren Antriebsrädern verbunden ist und die Kraftstoffzufuhr zum Motor unterbrochen ist; und
einem Motorbremsmodus (EBM), in dem sich die Abtriebswelle des Motors dreht, der Motor mit dem einen oder den mehreren Antriebsrädern verbunden ist und der Motor ferner so betrieben wird, dass er eine Bremswirkung erzeugt;
wobei der Verarbeitungsschaltkreis (102) ferner für Folgendes konfiguriert ist:
- Bestimmen einer Fahrzeug-Sollgeschwindigkeit;
- Bestimmen, dass eine Bedingung für den Freilaufmodus erfüllt ist, basierend auf beliebigen von Topografiedaten und Fahrzeugdaten;
- Bestimmen, dass das Antriebsstrangsystem entweder im ersten Freilaufmodus oder im zweiten Freilaufmodus betrieben wird;
**dadurch gekennzeichnet, dass**:
- wenn das Antriebsstrangsystem im ersten Freilaufmodus betrieben wird und ein Beschleunigungsniveau eine Beschleunigungsniveaubedingung erfüllt, das Antriebsstrangsystem vom ersten Freilaufmodus in den Segelmodus gesteuert wird, wodurch ermöglicht wird, dass das Fahrzeug beschleunigt, bis die Fahrzeug-Sollgeschwindigkeit erreicht ist; und
- wenn das Antriebsstrangsystem im zweiten Freilaufmodus betrieben wird, ferner bestimmt wird, den zweiten Freilaufmodus beizubehalten, wodurch ermöglicht wird, dass das Fahrzeug beschleunigt, bis die Fahrzeug-Sollgeschwindigkeit erreicht ist oder bis eine Bremsbedingung erfüllt ist.

2. Computersystem nach Anspruch 1, wobei der Verarbeitungsschaltkreis dazu konfiguriert ist, beim Erreichen der Fahrzeug-Sollgeschwindigkeit durch das Fahrzeug im zweiten Freilaufmodus direkt vom zweiten Freilaufmodus in den Motorbremsmodus zu wechseln, wodurch der Segelmodus umgangen wird.

3. Computersystem nach Anspruch 1 oder Anspruch 2, wobei der Verarbeitungsschaltkreis dazu konfiguriert ist, bei Erfüllung der Bremsbedingung im zweiten Freilaufmodus direkt vom zweiten Freilaufmodus in den Motorbremsmodus zu wechseln, wodurch der Segelmodus umgangen wird.

4. Computersystem nach einem der Ansprüche 1 bis 3, wobei die Fahrzeug-Sollgeschwindigkeit durch ein vorausschauendes Geschwindigkeitsregelungssystem (55) geregelt wird.

5. Computersystem nach einem der Ansprüche 1 bis 4, wobei der Verarbeitungsschaltkreis dazu konfiguriert ist, die Erfüllung der Bremsbedingung zu bestimmen, indem eine maximale Fahrzeuggeschwindigkeit für den Motorbremsmodus vorhergesagt wird, und zu bestimmen, dass die Bremsbedingung erfüllt ist, wenn die vorhergesagte maximale Fahrzeuggeschwindigkeit die Fahrzeug-Sollgeschwindigkeit überschreitet.

6. Computersystem nach Anspruch 5, wobei die maximale Fahrzeuggeschwindigkeit für den Motorbremsmodus anhand von Topografiedaten und Fahrzeugdaten vorhergesagt wird.

7. Computersystem nach Anspruch 5 oder Anspruch 6, wobei das Vorhersagen einer maximalen Fahrzeuggeschwindigkeit für den Motorbremsmodus das Bestimmen der verfügbaren Motorbremsleistung für den Motorbremsmodus und der erforderlichen Motorbremsleistung für den Motorbremsmodus umfasst, und
wobei die Bremsbedingung erfüllt ist, wenn die erforderliche Motorbremsleistung die verfügbare Motorbremsleistung übersteigt.

8. Computersystem nach einem der Ansprüche 1 bis 4, wobei der Verarbeitungsschaltkreis dazu konfiguriert ist, die Erfüllung der Bremsbedingung zu bestimmen, indem die verfügbare Motorbremsleistung mit der erforderlichen Motorbremsleistung verglichen wird, und wobei die Bremsbedingung erfüllt ist, wenn die erforderliche Motorbremsleistung die verfügbare Motorbremsleistung übersteigt.

9. Computersystem nach einem der vorhergehenden Ansprüche, wobei der Verarbeitungsschaltkreis dazu konfiguriert ist, basierend auf den Fahrzeugdaten, die einen oder mehrere Hemmfaktoren angeben, zu bestimmen, dass eine Bedingung für den Freilaufmodus erfüllt ist, um den Motor in einen Zustand zu versetzen, in dem sich die Abtriebswelle des Motors nicht dreht.

10. Computersystem nach einem der vorhergehenden Ansprüche, wobei der Verarbeitungsschaltkreis dazu konfiguriert ist, die Bremswirkung im Motorbremsmodus zu erzeugen, indem er den Motor aktiv steuert, um den inneren Widerstand innerhalb des Motors zu erhöhen.

11. Antriebsstrangsystem (11), das ein Computersystem (100) nach einem der Ansprüche 1 bis 10, einen Verbrennungsmotor (12), eine steuerbare Kupplung (14) und ein Getriebe (17) umfasst, das so angeordnet ist, dass es mittels der steuerbaren Kupplung mit dem Verbrennungsmotor gekoppelt wird, und wobei das Getriebe ferner eine Abtriebswelle (18) umfasst, die dazu konfiguriert ist, mit einer angetriebenen Achse (24) eines Radsatzes (20, 21) gekoppelt zu werden.

12. Fahrzeug (1), das ein Computersystem nach einem der Ansprüche 1-10 oder ein Antriebsstrangsystem nach Anspruch 11 umfasst.

13. Computerimplementiertes Verfahren (300) zum Steuern eines Antriebsstrangsystems (11) eines Fahrzeugs (10), wobei das Antriebsstrangsystem einen Verbrennungsmotor (12) umfasst, der mit einem oder mehreren Antriebsrädern verbunden werden kann, wobei das Antriebsstrangsystem selektiv in Folgendem betrieben wird: einem ersten Freilaufmodus (FM1), in dem sich eine Abtriebswelle des Verbrennungsmotors dreht, der Motor von dem einen oder den mehreren Antriebsrädern getrennt ist und dem Motor Kraftstoff zugeführt wird; einem zweiten Freilaufmodus (FM2), in dem sich die Abtriebswelle des Motors nicht dreht und der Motor von dem einen oder den mehreren Antriebsrädern getrennt ist; einem Segelmodus (CM), in dem sich die Abtriebswelle des Motors dreht, der Motor mit dem einen oder den mehreren Antriebsrädern verbunden ist und die Kraftstoffzufuhr zum Motor unterbrochen ist; und einem Motorbremsmodus (EBM), in dem sich die Abtriebswelle des Motors dreht, der Motor mit dem einen oder den mehreren Antriebsrädern verbunden ist und der Motor ferner so betrieben wird, dass er eine Bremswirkung erzeugt;
wobei das Verfahren Folgendes umfasst:
- Bestimmen (S10) einer Fahrzeug-Sollgeschwindigkeit durch einen Verarbeitungsschaltkreis eines Computersystems;
- Bestimmen (S20), dass eine Bedingung für den Freilaufmodus erfüllt ist, durch den Verarbeitungsschaltkreis des Computersystems basierend auf beliebigen von Topografiedaten und Fahrzeugdaten;
- Bestimmen (S30), dass das Antriebsstrangsystem entweder im ersten Freilaufmodus oder im zweiten Freilaufmodus betrieben wird, durch den Verarbeitungsschaltkreis des Computersystems;
**dadurch gekennzeichnet, dass**:
- wenn das Antriebsstrangsystem im ersten Freilaufmodus betrieben wird und ein Beschleunigungsniveau eine Beschleunigungsniveaubedingung erfüllt, das Antriebsstrangsystem durch den Verarbeitungsschaltkreis des Computersystems vom ersten Freilaufmodus in den Segelmodus gesteuert (S40) wird, wodurch ermöglicht wird, dass das Fahrzeug beschleunigt, bis die Fahrzeug-Sollgeschwindigkeit erreicht ist; und
- wenn das Antriebsstrangsystem im zweiten Freilaufmodus betrieben wird, ferner durch den Verarbeitungsschaltkreis des Computersystems bestimmt (S50) wird, den zweiten Freilaufmodus beizubehalten, wodurch ermöglicht wird, dass das Fahrzeug beschleunigt, bis die Fahrzeug-Sollgeschwindigkeit erreicht ist oder bis eine Bremsbedingung erfüllt ist.

14. Computerprogrammprodukt, das Programmcode zum Durchführen des Verfahrens nach Anspruch 13 umfasst, wenn er durch den Verarbeitungsschaltkreis ausgeführt wird.

15. Nichtflüchtiges, computerlesbares Speichermedium, das Anweisungen umfasst, die, wenn sie durch den Verarbeitungsschaltkreis ausgeführt werden, den Verarbeitungsschaltkreis dazu veranlassen, das Verfahren nach Anspruch 13 durchzuführen.

## Revendications

1. Système informatique (100) permettant de commander un système de transmission (11) d'un véhicule (10), le système de transmission comprenant un moteur à combustion interne (12) pouvant être connecté à une ou plusieurs roues motrices, le système informatique comprenant un circuit de traitement (102) configuré pour faire fonctionner sélectivement le système de transmission dans :
un premier mode de roue libre (FM1), dans lequel un arbre de sortie du moteur tourne, le moteur est déconnecté de la ou des roues motrices et le moteur est alimenté en carburant ;
un second mode de roue libre (FM2), dans lequel l'arbre de sortie du moteur est immobilisé en rotation, et le moteur est déconnecté de la ou des roues motrices ;
un mode roue libre (coasting) (CM), dans lequel l'arbre de sortie du moteur tourne, le moteur est relié à une ou plusieurs roues motrices et l'alimentation en carburant du moteur est interrompue ; et
un mode de freinage moteur (EBM), dans lequel l'arbre de sortie du moteur tourne, le moteur est relié à une ou plusieurs roues motrices et le moteur est en outre actionné de manière à produire un effet de freinage ;
le circuit de traitement (102) étant en outre configuré pour :
- déterminer une vitesse cible du véhicule ;
- déterminer qu'une condition de mode de libre est remplie sur la base de données topographiques ou de données relatives aux véhicules ;
- déterminer que la transmission fonctionne soit dans le premier mode de roue libre, soit dans le second mode de roue libre ;
**caractérisé en ce que** :
- si la transmission fonctionne dans le premier mode de roue libre et qu'un niveau d'accélération remplit une condition de niveau d'accélération, faire passer la transmission du premier mode de roue libre au mode roue libre (coasting), en permettant au véhicule d'accélérer jusqu'à atteindre la vitesse cible ; et
- si la transmission fonctionne dans le second mode de roue libre, déterminer en outre s'il faut maintenir le second mode de roue libre, ce qui permet au véhicule d'accélérer jusqu'à atteindre la vitesse cible du véhicule ou jusqu'à ce qu'une condition de freinage soit remplie.

2. Système informatique selon la revendication 1, dans lequel le circuit de traitement est configuré pour, lorsque le véhicule atteint la vitesse cible du véhicule dans le second mode de roue libre, passer directement du second mode de roue libre au mode de freinage moteur, en contournant ainsi le mode roue libre (coasting).

3. Système informatique selon la revendication 1 ou la revendication 2, dans lequel le circuit de traitement est configuré pour, lors de l'accomplissement de la condition de freinage dans le second mode de roue libre, passer directement du second mode de roue libre au mode de freinage moteur, en contournant ainsi le mode de roue libre.

4. Système informatique selon l'une quelconque des revendications 1 à 3, dans lequel la vitesse cible du véhicule est commandée par un système régulateur de vitesse prédictive (55).

5. Système informatique selon l'une quelconque des revendications 1 à 4, dans lequel le circuit de traitement est configuré pour déterminer l'accomplissement de la condition de freinage en prédisant une vitesse maximale du véhicule pour le mode de freinage moteur, et déterminer que la condition de freinage est accomplie si la vitesse maximale du véhicule prédite dépasse la vitesse cible du véhicule.

6. Système informatique selon la revendication 5, dans lequel la vitesse maximale du véhicule pour le mode de freinage moteur est prédite à partir de données topographiques et de données du véhicule.

7. Système informatique selon la revendication 5 ou la revendication 6, dans lequel la prédiction d'une vitesse maximale du véhicule pour le mode de freinage moteur comprend la détermination de la puissance de freinage moteur disponible pour le mode de freinage moteur et de la puissance de freinage moteur requise pour le mode de freinage moteur, et
la condition de freinage est remplie si la puissance de freinage moteur requise dépasse la puissance de freinage moteur disponible.

8. Système informatique selon l'une quelconque des revendications 1 à 4, dans lequel le circuit de traitement est configuré pour déterminer l'accomplissement de la condition de freinage en comparant la puissance de freinage moteur disponible à la puissance de freinage moteur requise, et la condition de freinage est remplie si la puissance de freinage moteur requise dépasse la puissance de freinage moteur disponible.

9. Système informatique selon l'une quelconque des revendications précédentes, dans lequel le circuit de traitement est configuré pour déterminer qu'une condition de mode de roue libre est remplie sur la base de données de véhicule indicatives d'un ou plusieurs inhibiteurs pour mettre le moteur dans un état dans lequel l'arbre de sortie du moteur est non rotatif.

10. Système informatique selon l'une quelconque des revendications précédentes, dans lequel le circuit de traitement est configuré pour générer l'effet de freinage dans le mode de freinage moteur en commandant activement le moteur pour augmenter la résistance interne à l'intérieur du moteur.

11. Système de transmission (11) comprenant un système informatique (100) selon l'une quelconque des revendications 1 à 10, un moteur à combustion interne (12), un embrayage réglable (14), une transmission (17) conçue pour être couplée au moteur à combustion interne au moyen de l'embrayage réglable, et dans lequel la transmission comprend en outre un arbre de sortie (18) configuré pour être couplé à un essieu mené (24) d'un jeu de roues (20, 21).

12. Véhicule (1) comprenant un système informatique selon l'une quelconque des revendications 1 à 10 ou un système de transmission selon la revendication 11.

13. Procédé informatisé (300) permettant de commander un système de transmission (11) d'un véhicule (10), le système de transmission comprenant un moteur à combustion interne (12) pouvant être connecté à une ou plusieurs roues motrices, le système de transmission pouvant fonctionner sélectivement dans un premier mode de roue libre (FM1), dans lequel un arbre de sortie du moteur à combustion interne tourne, le moteur est déconnecté de la ou des roues motrices et du carburant est fourni au moteur ; un second mode de roue libre (FM2), dans lequel l'arbre de sortie du moteur est non rotatif, et le moteur est déconnecté d'une ou plusieurs roues motrices ; un mode roue libre (coasting) (CM), dans lequel l'arbre de sortie du moteur tourne, le moteur est connecté à une ou plusieurs roues motrices et l'alimentation en carburant du moteur est interrompue ; et un mode de freinage moteur (EBM), dans lequel l'arbre de sortie du moteur tourne, le moteur est relié à une ou plusieurs roues motrices, et le moteur est en outre actionné de manière à générer un effet de freinage ;
le procédé comprenant :
- la détermination (S10), par un circuit de traitement d'un système informatique, d'une vitesse cible du véhicule ;
- la détermination (S20), par les circuits de traitement du système informatique, qu'une condition de mode de roue libre est remplie sur la base de données topographiques ou de données du véhicule ;
- la détermination (S30), par les circuits de traitement du système informatique, que le système de transmission fonctionne soit dans le premier mode de roue libre, soit dans le second mode de roue libre ;
**caractérisé en ce que** :
- si le système de transmission fonctionne dans le premier ode de roue libre et qu'un niveau d'accélération remplit une condition de niveau d'accélération, le passage (S40), par les circuits de traitement du système informatique, du système de transmission du premier mode de roue libre au mode roue libre (coasting), en permettant au véhicule d'accélérer jusqu'à atteindre la vitesse cible du véhicule ; et
- si le système de transmission fonctionne dans le second mode de roue libre, en outre la détermination (S50), par les circuits de traitement du système informatique, de maintenir le second mode de roue libre, en permettant au véhicule d'accélérer jusqu'à atteindre la vitesse cible du véhicule ou jusqu'à ce qu'une condition de freinage soit remplie.

14. Produit de programme informatique comprenant un code de programme pour exécuter, lorsqu'il est exécuté par le circuit de traitement, le procédé selon la revendication 13.

15. Support de stockage non transitoire lisible par ordinateur comprenant des instructions qui, lorsqu'elles sont exécutées par les circuits de traitement, amènent les circuits de traitement à exécuter le procédé selon la revendication 13.
